# EUROPEAN PATENT SPECIFICATION

(11) **EP 1 300 790 B1**
(45) Date of publication and mention of the grant of the patent: **09.08.2006**
(21) Application number: 01947974.0
(22) Date of filing: 11.07.2001
(51) Int. Cl.: G06Q 99/00, C09D 7/14, C09D 201/00

(54) **PAINT MANUFACTURING METHOD**
VERFAHREN ZUR HERSTELLUNG VON FARBMISCHUNGEN
PROCEDE DE PREPARATION DE PEINTURE

(30) Priority: 12.07.2000 JP 2000211668; 29.03.2001 JP 2001097052
(43) Date of publication of application: 09.04.2003
(73) Proprietor: Nippon Paint Co., Ltd., Osaka-shi, Osaka 530-8511 (JP)
(72) Inventor: ANDO, Yoshio Nippon Paint Co.,LTD.Tokyo Operations, Shinagawa-ku,Tokyo 140-8675 (JP); KAWABE, Toya Nippon Paint Co.,LTD.Tokyo Operations, Shinagawa-ku,Tokyo 140-8675 (JP)
(74) Representative: Rees, Alexander Ellison
(86) International application number: PCT/JP2001/006015
(87) International publication number: WO 2002/005163

(56) References cited:
- EP-A1- 1 006 344
- JP-A- 7 160 762
- JP-A- 10 324 829
- JP-A- 11 066 119
- JP-A- 2000 170 397
- DATABASE WPI Section PQ, Week 199851 Derwent Publications Ltd., London, GB; Class P75, AN 1998-605670 XP002305849 & JP 10 276294 A (CANON KK) 13 October 1998 (1998-10-13)

## Description

### TECHNICAL FIELD

The present invention relates to paint manufacturing methods, coating methods, and paint manufacture data management systems, and more particularly to a paint manufacturing method, a coating method, and a paint manufacture data management system that reduce time and effort in determining a selected color and decrease color-adjustment operations.

### BACKGROUND ART

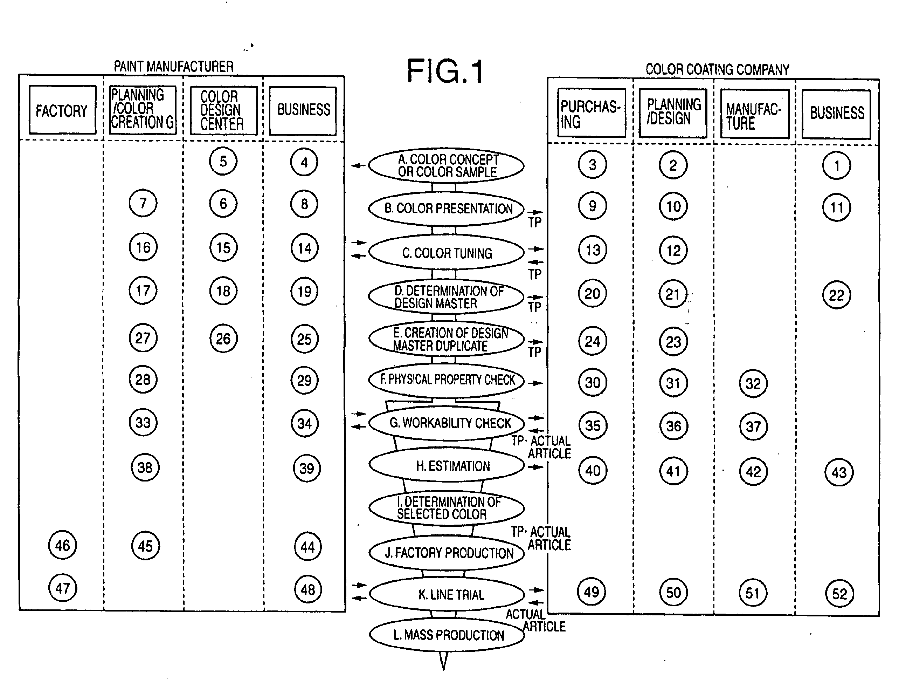

FIG. 1 shows communication between a paint manufacturer and a color coating company on coating of cellular phones.

A series of operation processes performed by the paint manufacturer and the color coating company are shown by "A. Color Concept", etc. in the center of FIG. 1. The coating of the cellular phones is performed through the following 12 processes (A) through (L).

### (A) Color Concept/Color Sample

A designer of the color coating company presents the paint manufacturer with the image of a color applied to the products which image is expressed by keywords, collages, music, or a color sample.

### (B) Color Presentation

Receiving the color concept or color sample, the paint manufacturer creates a color corresponding to the color concept or color sample by color creation means, and makes a painted panel of the color. The painted panel serves as a coating sample, and color presentation is performed by presenting the color coating company with the painted panel. The coating sample for color presentation is made in the color design center (the research section) of the paint manufacturer. Generally, a plurality of coating samples are made for the color concept, and one coating sample is made for the color sample.

The above-described color creation means is a method of creating a color based on the color concept or color sample (hereinafter, referred to as "a color concept or the like" in some cases). A person in charge of color creation performs color creation by properly compounding fundamental colors based on her/his past experiences.

### (C) Color Tuning

The color coating company selects one coating sample for color presentation or more, and the designer performs color correction on the selected coating sample(s). The color correction is expressed with respect to a tune, a hue, and light intensity by using the coating sample(s).

Based on the color correction by the color coating company, the paint manufacturer presents the color coating company with the color-corrected coating sample(s).

### (D) Determination of Design Master

A design master is determined as a result of a great amount of communication between the paint manufacture and the color coating company in the color presentation and the color tuning.

The design master is a paint color on which the paint manufacturer and the color coating company agree on a design. The design master is determined by mutually checking an actual article coated with a paint manufactured in the color design center. Further, paint panels of peripheral colors are made if necessary.

### (E) Duplication of Design Master

This process is performed in the case of a color contest. If the color contest is held among competitive companies and the color of another company is determined as the design master, a design master color-matched to the design master panel of the other company (a duplicate of the design master panel of the other company) is made. The duplicated design master is treated in the same way as the design master made by the above-described (A) through (D).

### (F) Physical Property (Paint Film Performance) Check

The physical and chemical performance of a paint film coating a material is checked by using the design master panel or the duplicated panel. Weathering resistance (degree of degradation with respect to sunlight), corrosion resistance (degree of degradation with respect to rust and water), hardness, electrical resistance, and gloss are checked, for instance.

### (G) Workability (Coating Workability) Check

It is checked whether the paint causes any trouble to coating work. A line to be applied is also checked.

### (H) Estimation

The price of the paint finished with the workability check is estimated. Estimation is made by using price per paint, price per m², or price per unit, for instance.

### (I) Determination of Selected color

A selected color is determined with the estimation and workability being taken into consideration.

### (J) Factory Production

A selected paint is produced in a factory.

### (K) Line Trial

Coating is performed on the line by using the paint produced in the above-described (J), and color matching is performed until a given color is developed.

### (L) Mass Production

Coating is performed on the line by using the paint qualified in the line trial.

In the above-described 12 processes, the planning/factory, the color creation group, the color design center, and the business of the paint manufacturer and the purchasing, the planning/design, the manufacture, and the business of the color coating company are involved.

In the process of the color concept or the like, the business and the planning design of the color coating company are involved to propose the color concept or the like to the paint manufacturer (steps 1 through 3. Steps are represented by circled numbers in the drawing. The same applies hereinafter). The business and the color design center of the paint manufacturer are involved to accept the proposal (steps 4 and 5).

Further, in the process of color presentation, the color creation group, the color design center, and the business of the paint manufacturer are involved to make the coating sample(s) and present the color coating company with the coating sample(s) (steps 6 through 8). The business, the planning design, and the purchasing of the color coating company are involved to receive the color presentation (steps 9 through 11).

Thus, through the 12 processes consisting of the 52 steps, the paint of the determined selected color is manufactured, and color coating is performed by using the paint.

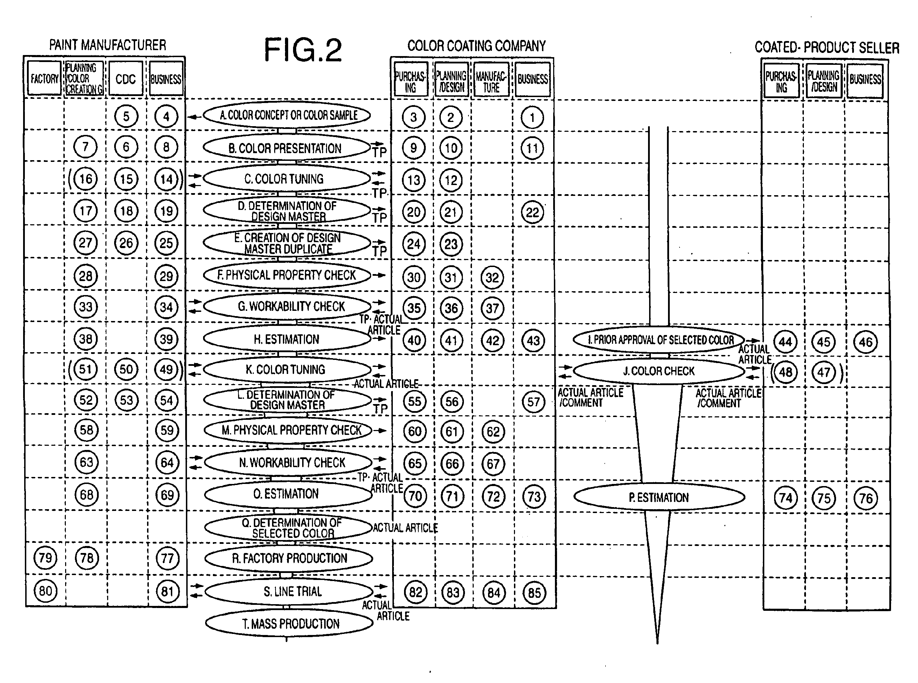

If, in addition to the color coating company and the paint manufacturer,
- a coated-product seller is involved in determining the color,
- an end user is involved in determining the color,
- a base material manufacturer is involved,
the number of processes and the number of steps are increased. In the case of involving the coated-product seller in determining the color, for instance, there are 20 processes and 85 steps as shown in FIG. 2, for instance, with three processes of (I) Prior Approval of Selected color, (H) Color Check, and (P) Estimation between the color coating company and the coated-product seller, and six processes of (K) Color Tuning, (L) Determination of Design Master, (M) Physical Property Check, (N) Workability (Coating Workability) Check, (O) Estimation, and (Q) Determination of Selected color after the process of (H) Estimation between the color coating company and the coated-product seller being added. In the case of FIG. 2, the number of processes and the number of steps are increased by 8 and 33, respectively, compared with the case of FIG. 1.

In FIGS. 1 and 2, TP indicates the coating sample(s). A required number of coating samples are made in many processes such as the processes of color presentation, color tuning, and determination of design master, and are presented to the color coating company by the paint manufacturer. Further, actual articles (coated cellular phones) are made upon request in the processes of workability check, determination of selected color, and line trial.

However, the conventional determination of the selected color and the conventional color coating includes the following disadvantages:
(1) The paint manufacturer, the color coating company, and the coated-product seller exchange visits to make various decisions, viewing the painted panel or the actual article, in many processes such as the processes of color concept or the like, color presentation, color tuning, and determination of design master. As a result, a lot of time and effort has been required for making the painted panel or the actual article and for meetings for discussion.
(2) The color is determined based on the paint made in the research section (the color design center). However, a difference in color is caused between paints manufactured in the same way due to differences in manufacturing conditions between the research section and the factory. Therefore, trial coating is performed many times to obtain the agreed color in the line trial.
(3) Color determination by the color presentation and the color tuning is performed based on the painted panel. However, in the case of a lustrous color, for instance, the color changes with viewing angles so that the color may look different on, for instance, a cellular phone actually coated with the color from its image obtained from the painted panel.
(4) Color is developed differently depending on a line or a coating machine in the factory of a color coating company even if the same paint is employed. Therefore, it is required to adjust mixture to the line or coating machine of the factory of the color coating company in a trial-and-error manner.
(5) Color may change with the passage of time even if coating is performed by the same coating machine using the same paint. It is also required to adjust mixture in this case.

### DISCLOSURE OF THE INVENTION

The present invention is made in view of the above-described disadvantages, and has an object of providing a paint manufacturing method, coating method, and a paint manufacture data management system that reduces time and effort in determining a color to be determined and decreases color-adjustment operations.

In order to achieve this object, the present invention adopts a configuration where at least one of following processes (A) through (E) is performed by using a communication network in the processes (A) through (E).
(A) a process of a color coating system informing a paint manufacture data management system of a color concept or a color sample;
(B) a process of the paint manufacture data management system receiving the information of the color concept or the color sample, creating colors corresponding to the color concept or the color sample by color creation means, and performing color presentation by informing the color coating system and/or a coated product sales system of the colors;
(C) a process of the color coating system and/or the coated product sales system informing the paint manufacture data management system of color image information for correcting a color selected from the created colors;
(D) a process of the paint manufacture data management system performing color tuning based on the color image information and approving, together with the color coating system and/or the coated product sales system, a color as a design master, the color being determined as a result of repeating the provision of the color image information and the color tuning through mutual communication between the paint manufacture data management system and the color coating system and/or the coated product sales system; and
(E) a process of determining a selected color and paint for developing the color of the design master and creating paint mixture data by mutual communication of the paint manufacture data management system and the color coating system.

Thereby, the paint manufacture data management system and the color coating system and/or the coated product sales system can determine the color of a color paint by using the communication network, manufacture the paint by using the data of the determined color, reduce time and effort in determining the selected color, and decrease color-adjustment operations.

The paint manufacture data management system according to the present invention is held by a manufacturer producing a color paint and connected to the communication network. This paint manufacture data management system receives the color concept or the like and the color image from the color coating system, performs color creation, color presentation, and color tuning, and creates the paint mixture data. Further, the paint manufacture data management system is held by the paint manufacture at present, but may not necessarily be held by the paint manufacture in the future.

The color coating system refers to a system (including a computer and a terminal connected to the communication network) operated by a designer, planner, or seller of an object for coating subjected to color coating, or a company actually performs coating on the object for coating (a color coating company). The coated product sales system according to the present invention is a system held by a seller of coated products and includes a terminal connected to the communication network.

In a case where a color contest is held among competitive companies so that a color of another company is determined as a design master, the paint manufacture data management system may make a duplicate panel from the design master of the other company and the duplicate panel may be treated as the design master in the process (D).

Thereby, a case where the color of another company is determined as a design master in a color contest can be coped with.

In light of color data displayed in a three-dimensional image on a monitor, the color presentation in the process (B) and the color tuning in the process (D) may be performed by the paint manufacture data management system providing color data for three-dimensional image display which color data is based on multi-angular spectral reflectance so that the colors may be displayed in three-dimensional images on a monitor of the color coating system and/or a monitor of the coated product sales system.

Thereby, the color presentation and the color tuning may be performed by means of three-dimensional image display on the monitor. Further, in the case of using a three-dimensional image that can show the way a color changes with viewing angles on the monitor, coating conditions can be understood more exactly, thus enabling a precise color determination.

Further, in light of information contents presented in the process (B), the color presentation in the process (B) may include at least one of coating workability information, paint film performance information, and price information.

Thereby, a coating workability check, a paint film performance (physical property) check, and provision of the price information can be performed together with the color presentation so that it is no more necessary to establish a coating workability check process, a paint film performance check process, and a price information provision process independently. Consequently, time and effort in color determination can be reduced.

Further, in light of a monitor to be used, a display monitor employed in the color coating system and/or a display monitor employed in the coated product sales system in the processes (B), (C), and (D) may be equal in type, model, and adjustment to a standard monitor provided in the paint manufacture data management system.

Thereby, the same three-dimensional image display can be performed among the paint manufacture data management system, the color coating system, and the coated product sales system.

Further, at least one of a process of the paint manufacture data management system informing the color coating system and/or the coated product sales system of a peripheral color created from the design master, and the paint manufacture data management system and the color coating system and/or the coated product sales system mutually checking the peripheral color, (G) a process of the paint manufacture data management system informing the color coating system of paint film performance of a paint of the selected color selected in the process (E) (H) a process of the paint manufacture data management system informing the color coating system of price information of the paint of the selected color selected in the process (E) may be included.

Further, in light of simultaneous use of a color determination method in a conventional method, a coating sample may also be used in the process (B) and/or the process (D), and the process (F).

Thereby, the coating samples may be used at the same time while it meets with resistance to determine the color of a color paint only by a screen.

Further, in light of a direct color determination by a coated-product end user, an end user of a coated product may access one of the paint manufacture data management system, the color coating system, and the coated product sales system, and inform the accessed one of the color concept or the color sample and the color image information of a coated product to purchase.

Thereby, for instance, the end user of the coated product can specify the color of a commercial product to purchase in purchasing the commercial product so as to be able to purchase the commercial product of the color that matches her/his personal character.

Further, in light of a case where paint is applied on a colored base material, in the case of coating a colored base material with paint, the paint manufacture data management system or the color coating system may inform a base material manufacturing system providing the base material of color information of a base material color in the process (D), the base material manufacturing system and the color coating system may thereafter determine a selected base material and the base material color, and a design master including the selected base material and the base material color may be determined thereafter.

Thereby, the case where the paint is applied on the colored base material can be coped with.

Further, in light of a manufacturer of paint, the paint manufacture data management system may manufacture paint based on mixture data created by the paint manufacture data management system, or that the paint manufacture data management system may inform the color coating system of the mixture data so that the color coating system may manufacture the paint based on the mixture data.

Thereby, the color coating system is enabled to manufacture the paint so that a required amount of paint can be manufactured when necessary and coating can be performed with the paint. Therefore, a paint stock is decreased to reduce the problem of a change with the passage of time.

Further, from a viewpoint that a coating contractor manufactures paint, a coating contract system of a company related to the color coating system may manufacture the paint based on the mixture data of which the color coating system is informed.

Thereby, the coating contract system of the company related to the color coating system can manufacture the paint.

Further, in light of a coating method, a paint manufacture data management system may provide paint mixture data created by the process (D) of claim 1 so that coating may be performed after or while a color coating system or a coating contract system of a company related to the color coating system performs color matching on paint based on the provided mixture data.

Thereby, the color coating system or the coating contract system can perform coating after or while performing color matching on the paint by using an automatic color-matching machine. Further, the color coating system or the coating contract system uses the paint mixed based on the data corrected in consideration of the coating conditions of the coating machine of the color coating company so that coating can be performed without a problem of a color difference.

Further, in light of management of coating conditions by the paint manufacture data management system, the color coating system or the coating contract system of the company related to the color coating system may inform the paint manufacture data management system of at least data for coating conditions which data is used in the coating so that the paint manufacture data management system may manage the coating conditions by the data.

Advantages of the management of the coating conditions by the paint manufacture data management system are as follows:

### ① Prevention of Complaints

In the case of a change in coating line conditions made unilaterally for customer's own reasons, a complaint about a color difference may be made if the same paint is used. In this case, the paint manufacture data management system issues a warning.

② A color presentation operation is made efficient with the knowledge of line coating conditions. That is, color development based on most recent information is possible.

Further, in light of prevention of any difference from a design master, the color coating system or the coating contract system may measure a panel coated with a color-matched paint by a colorimeter and compares a measurement thereof and data of a design master, and the color matching may be performed again if a difference between the coated panel and the design master is larger than or equal to a given one.

Thereby, the color coating system or the coating contract system can perform a proper coating.

Further, in light of a paint manufacture data management system, a paint manufacture data management system connected via a communication network to a color coating system and/or a coated product sales system may include a communication control part communicating with a plurality of color coating systems and/or coated product sales systems, a color-matching part performing color matching based on information transmitted from the color coating systems and/or the coated product sales systems, and an image processing part generating images of color-matched coated products.

Further, the paint manufacture data management system may further include one of a price information provision operation part, a paint film performance check operation part, and a workability check operation part, may further include a coating condition correction data file, and may further include a determined color data file.

### BRIEF DESCRIPTION OF THE DRAWINGS

Other objects, features and advantages of the present invention will become more apparent from the following description when read in conjunction with the accompanying drawings, in which:
FIG. 1 is a (first) diagram for illustrating an operation flow between a paint manufacturer and a color coating company in a conventional case;
FIG. 2 is a diagram for illustrating an operation flow among the paint manufacturer, the color coating company, and a coated-product seller in a conventional case;
FIG. 3 is a diagram for illustrating a system configuration of a first embodiment of the present invention;
FIG. 4 is a diagram for illustrating a system configuration of a paint manufacture data management system;
FIG. 5 is a flow for illustrating flows of information, stuff, and time between the paint manufacture data management system and a color coating system in the first embodiment of the present invention;
FIG. 6 is a (first) screen of a proposal of a color concept or the like;
FIG. 7 is a (second) screen of the proposal of the color concept or the like;
FIG. 8 is a (first) color-presentation screen;
FIG. 9 is a (second) color-presentation screen;
FIG. 10 is a color-tuning screen;
FIG. 11 is a screen of a design master duplicate;
FIG. 12 is a (first) diagram for illustrating an operation flow between the paint manufacture data management system and the color coating system in the first embodiment of the present invention;
FIG. 13 is a (second) diagram for illustrating the operation flow between the paint manufacture data management system and the color coating system in the first embodiment of the present invention;
FIG. 14 is a diagram for illustrating a system configuration of a second embodiment of the present invention;
FIG. 15 is a flow for illustrating flows of information, stuff, and time between the paint manufacture data management system and the color coating system in the second embodiment of the present invention;
FIG. 16 is a (first) diagram for illustrating an operation flow among the paint manufacture data management system, the color coating system, and a coated product sales system in the second embodiment of the present invention;
FIG. 17 is a (second) diagram for illustrating the operation flow among the paint manufacture data management system, the color coating system, and the coated product sales system in the second embodiment of the present invention;
FIG. 18 is a diagram for illustrating a system configuration of a third embodiment of the present invention;
FIG. 19 is a diagram for illustrating an automatic color-matching system in the color coating system of a fourth embodiment of the present invention;
FIG. 20 is a diagram for illustrating a system configuration of a fifth embodiment of the present invention; and
FIG. 21 shows an operation flow for illustrating a sixth embodiment of the present invention.

### BEST MODE FOR CARRYING OUT THE INVENTION

A description will now be given, with reference to the drawings; of embodiments of the present invention.

### (Embodiment 1)

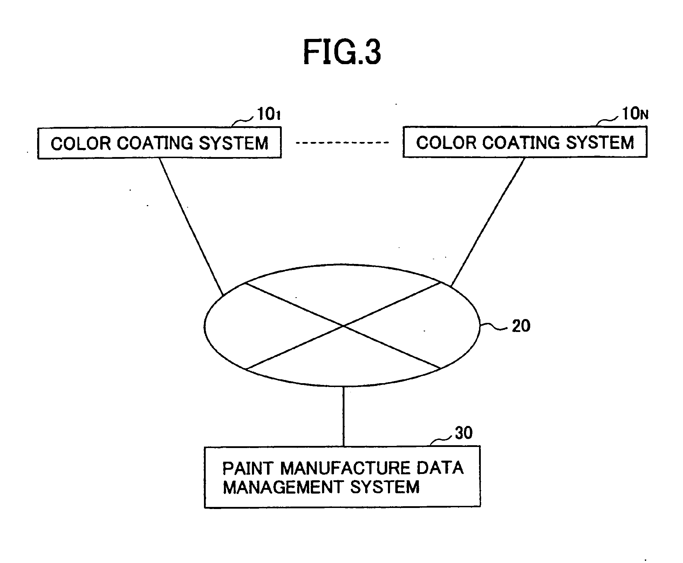

FIG. 3 shows a system configuration of an embodiment 1. The embodiment 1 is a system involving a paint manufacturer and color coating companies.

The system of FIG. 3 is composed of a color coating system 10₁ through a color coating system 10_{N}, a communication network 20, and a paint manufacture data management system 30.

According to this system, the paint manufacturer and the color coating companies exchange information required for paint manufacture, such as objects for coating, coating conditions, paints, and colors, via the communication network 20 by using the color coating systems 10 and the paint manufacture data management system 30 so that the paint manufacturer manufactures color paints that match images such as color concepts or the like proposed by the color coating companies.

The color coating system 10₁ through the color coating system 10_{N} and the paint manufacture data management system 30 can communicate with each other at any time by using the communication network 20. The communication network 20 is a public line or a private line, which may be wire or radio communication or communication including both of them.

In the present invention, the information required for paint manufacture transmitted by communication means can be used in common by related systems such as the color coating systems and the paint manufacture data management system.

The color coating systems 10 are held by companies (the color coating companies) providing coating on a variety of objects for coating such as cellular phones, PHS, household appliances, and automobiles, and are connected to the communication network system 20. A coated product manufacturer such as a cellular phone maker can be taken as an example of the color coating companies. Those partly engaged in the manufacture of coated products, such as a plastic molding maker and a plastic paint-coating company, are complementary to the color coating companies, and, usually, do not have color coating systems. However, those complementary to the color coating companies may have their color coating systems as required. The color coating companies transmit the color concepts to, receive color presentations from, transmit color images to, and perform color tuning with the paint manufacture data management system 30 by using the color coating systems 10, thus participating in design master determination.

The paint manufacture data management system 30 is held by the color paint manufacturer and connected to the communication network system 20. Although held by the color paint manufacturer at present, the paint manufacture data management system 30 may be a data center managing paint manufacture data in future. The paint manufacture data management system 30 receives the color concepts or the like from the color coating systems 10, creates colors by color creation means, performs color presentation by transmitting the colors to the color coating systems, receives the color images from the color coating systems, and performs color tuning. Further, paint mixtures are calculated based on the multi-angular spectral reflectance data of design masters determined on the side of the color coating systems (a design master of another company may be adopted in the case of a color contest), and selected colors are determined based on physical properties (paint film performance), workability, and price data. Further, the paint manufacture data management system 30 creates paint mixture data.

The paint manufacture data management system 30, for instance, can receive data for coating conditions at the time of use in the color coating systems 10 and manage the coating conditions of the color coating systems by the data.

The color creation means is a method of creating color based on the color concept or the like, and includes a method that a person in charge of color creation properly compounds fundamental colors based on her/his past experiences and a method that color is created by computer color matching. Here, color creation is performed chiefly by the computer color matching, and a created color is recognizably displayed on a panel or a monitor.

Further, the color coating system 10₁ through the color coating system 10_{N} and the paint manufacture data management system 30 are provided with display units that can display a three-dimensional image in the same way so as to enable the color presentation and the color tuning. For instance, display monitors used on the side of the color coating systems and a standard monitor provided in the paint manufacture data management system are of the same type and model and are equally adjusted.

As required, man can perform some of the operations of the color coating systems 10, the communication network 20, and the paint manufacture data management system 30 depending on the contents of the operations.

The paint and color information is numerically expressed, and once a color is determined, a paint is determined so that its components are also determined. Accordingly, the paint manufacture data management system is enabled to manufacture the paint immediately using the paint and color information.

Since the paint and color information is numerically expressed, mixture can be corrected by inputting actual coating conditions (conveyer speed, coating area, delivery, output pressure, gun distance, number of recoatings, number of strokes, stroke width, pattern width, paint temperature, booth temperature, film thickness, etc.) and referring to a later-described coating condition correction file. If a digital coating machine is employed as a coating machine, paint can be mixed in accordance with the coating machine.

The color coating systems are allowed to obtain the paint and color information from the paint manufacture data management system to manufacture the paints. At this point, if the color coating systems employ automatic color-matching machines, the color coating systems can perform coating while performing color matching on the paints.

Further, any of the coating systems can manufacture a coated product of the same tone if the coating systems use paints color-matched in specific automatic color-matching machines based on the information provided by the paint manufacture data management system on fundamental color paints and paint composition and employ digital coating machines based on coating information.

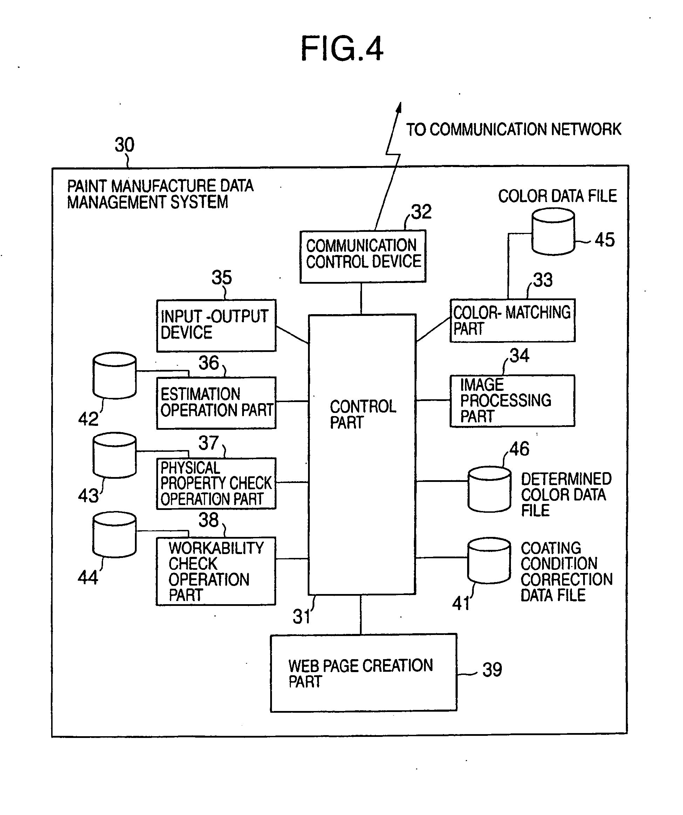

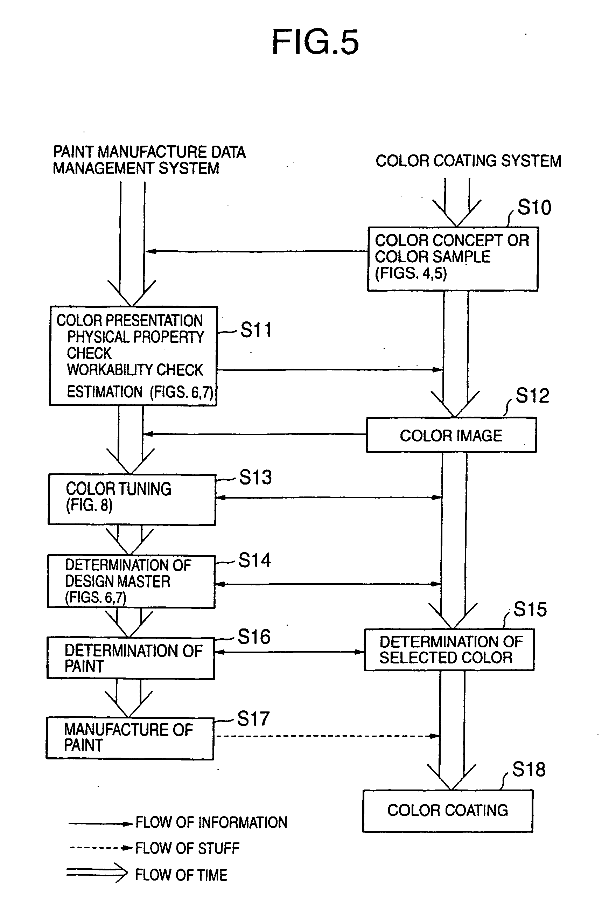

FIG. 4 shows a configuration of the paint manufacture data management system 30.

FIG. 4 is composed of a control part 31 controlling the entire paint manufacture data management system, a communication control device 32 controlling a communication function, a color-matching part 33 creating a color that matches an image such as the color concept or the like and managing color data, an image processing part 34 generating a color three-dimensional image of a coated product, an input-output device 35 of the paint manufacture data management system 30, an estimation operation part (a price information provision operation part) 36 performing estimation at the time of the color presentation, a physical property check operation part 37 making a check on physical properties (paint film performance) at the time of the color presentation, a workability check operation part 38 making a workability check at the time of the color presentation, a coating condition correction data file 41 storing data for performing mixture correction with respect to coating conditions, an estimation data file 42 storing data used in the estimation, a physical property check data file 43 storing data used in the physical property check, a workability check data file 44 storing data used in the workability check, a color data file 45 storing data used in the color-matching part 33, and a determined color data file 46 storing data for a determined color (color determination number, color, mixture data, determiner, other related data).

The color-matching part 33, for instance, performs calculation of color matching with respect to chromatic color pigments (including black and gray), lustrous color materials (such as a metal flake and a pearlescent mica), and an achromatic color (white).

As the calculation of color matching, pigment mixture calculation that performs color matching with respect to a diffusion-light-type spectral pattern, and lustrous color material mixture calculation that performs color-matching calculation with respect to a multi-angular measurement spectral pattern are performed. The color data file 45 stores wavelengths intrinsic to pigments and reflectance data by which a mixture ratio of the pigments can be determined with respect to a given color.

Since the color data file 45 stores mixture data and characteristic data corresponding to each color, the color-matching part 33 can obtain the mixture data and characteristic data of a color-matched color by referring to the color data file 45.

The color-matching part 33 can perform calculation as to what a color will be like and display the color once the mixture of the materials (including lustrous materials) of the color is known. On the other hand, once a color is determined, the materials of the color can be specified. At this point, data that is not stored in the color data file 45 is complementarily obtained from peripheral data. Further, at this point, this complementing operation may be performed in consideration of the weighting of the materials.

Once the color is determined, the materials thereof can be specified. However, there is a case where a plurality of combinations of materials are possible. In this case, a final combination of materials is determined by referring to coating workability information, paint film performance information, and price information.

FIG. 5 shows an operation flow between the color coating system 10 and the paint manufacture data management system 30. A description will be given in order in accordance with the flow.

S10: The color coating system proposes a color concept or the like. The color coating company accesses the paint manufacture data management system 30 by the color coating system 10, and displays a web page screen for requesting paint manufacture (created by a web page creation part 39 of FIG. 4) (not shown in the drawing). A color concept proposal screen is displayed in accordance with the instructions of the web page.

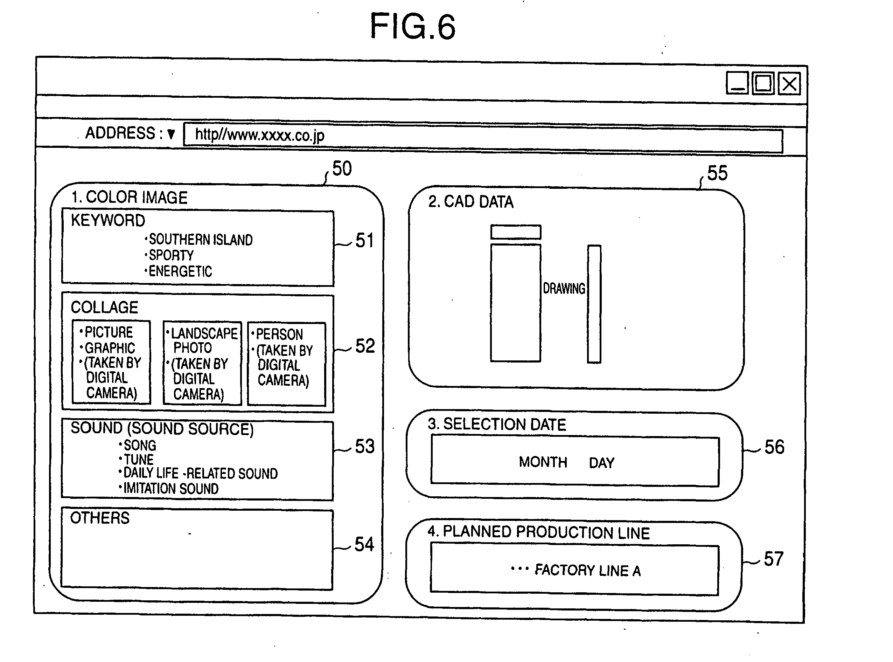

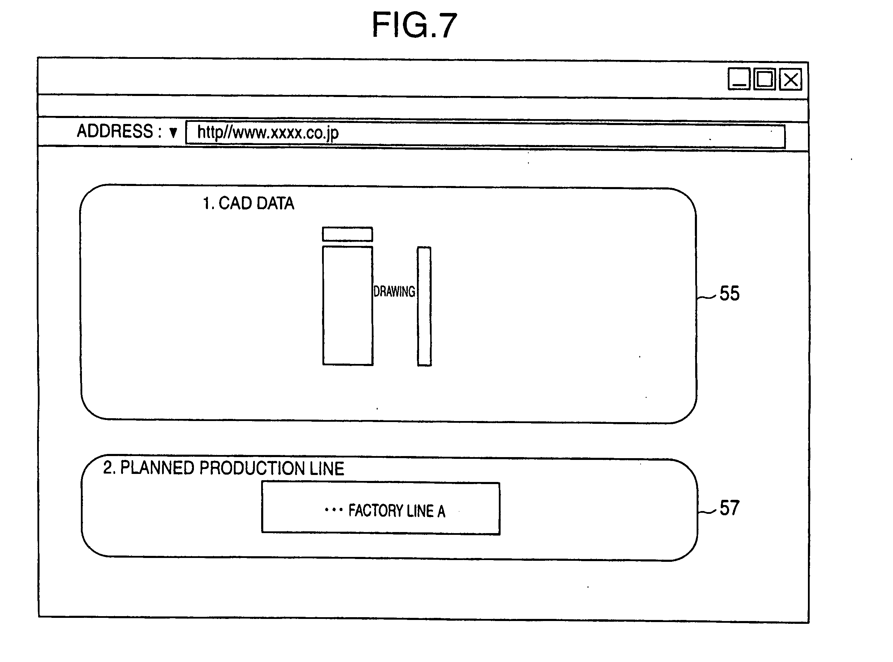

FIG. 6 shows an example of the proposal screen of the color concept or the like. The example of FIG. 6 is composed of a color image 50, a CAD data 55, a selection date 56, and a planned production line 57. The color image 50 is composed of a keyword 51, a collage 52, a sound 53, and others 54. The color coating system proposes the color concept to the paint manufacture data management system by inputs to the color concept proposal screen. A color concept proposal screen of FIG. 7, which is a simplification of the color concept proposal screen of FIG. 6, will also do. Further, the proposal of the color concept or the color sample without using the communication network as in the conventional cases will do as well.

S11: In response to the proposal of the color concept or the like, the paint manufacture data management system performs color presentation to the color coating system by using the communication network. In the color presentation, the paint manufacture data management system transmits color data for three-dimensional image display (for instance, three-dimensional CAD data) based on the multi-angular spectral reflectance data to the color coating system via the communication network, and it is displayed in the color coating system. In the color presentation, mixture information, physical property information, paint workability information, price information, and delivery date information may be transmitted in addition to the above-described three-dimensional image.

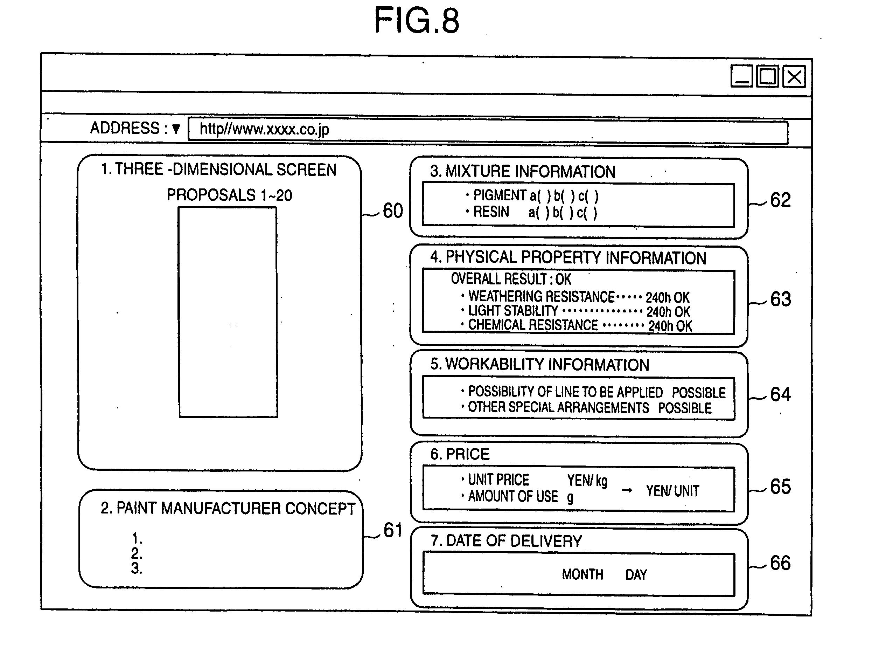

FIG. 8 shows a color-presentation screen. The color-presentation screen of FIG. 8 is composed of a three-dimensional screen 60, a paint manufacturer concept 61, mixture information 62, physical property information 63, workability information 64 including correction data for the color coating line and a coating machine which data is obtained by referring to the coating condition correction data file 41 of FIG. 4, a price 65, and a date of delivery 66.

A three-dimensional picture of the coating of a proposed color is rotatably displayed on the three-dimensional screen 60. Therefore, the color coating company can make a judgment by viewing how the color changes with different angles. The three-dimensional screen 60 is created by the image processing part 34 of FIG. 4.

The mixture information 62 shows the ingredient names and percentages of the pigments and resins of the proposed color. This data may be obtained from the color data file 45 by the color-matching part 33. The physical property information 63 shows weathering resistance, light stability, and chemical resistance together with their statuses in the mixture of the proposed color. This data is processed in the physical property check operation part 37 by referring to the color data file 45 and the physical property check data file 43. The workability information 64 shows the possibility of a line to be applied and, if a special arrangement is required, the required items thereof as well. The price 65 shows a rough estimation (price information) in the mixture of the proposed color. This estimation is processed in the estimation operation part 36 by referring to the color data file 45 and the estimation data file 42 of FIG. 4. The date of delivery 66 shows the date of delivery of the proposed color.

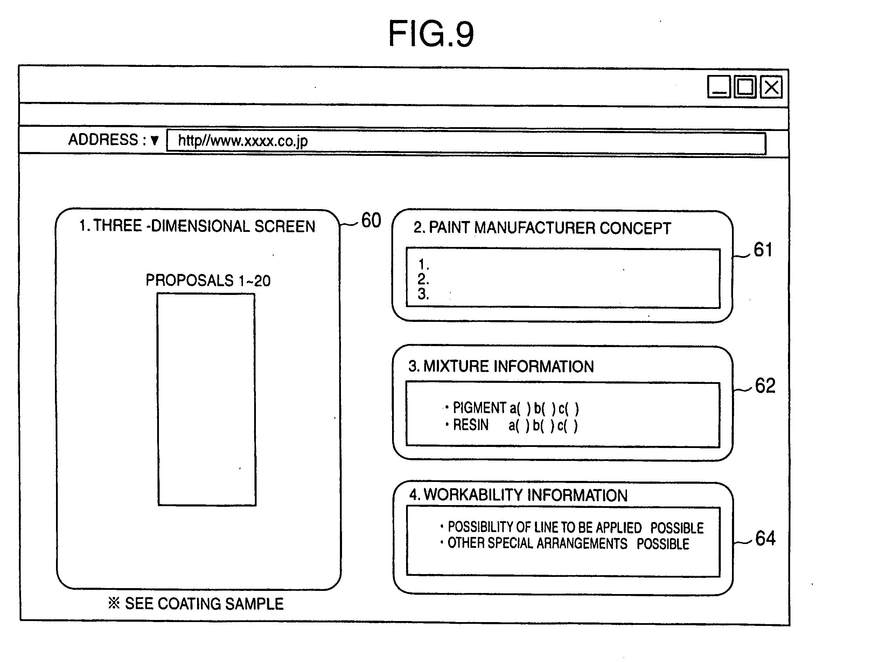

In the case of performing color presentation using a coating sample at the same time, the color-presentation screen may be as shown in FIG. 9. In this case, the physical property check and the estimation are required to be made after a design master is determined.

S12: The color coating system transmits a color image or color images to the paint manufacture data management system to correct one color or more selected from those created for color presentations in the color presentation (one color in the case of responding to the color sample).

The color coating company selects preferred ones of the proposed color presentations, and proposes the color images by making comments on the color presentations.

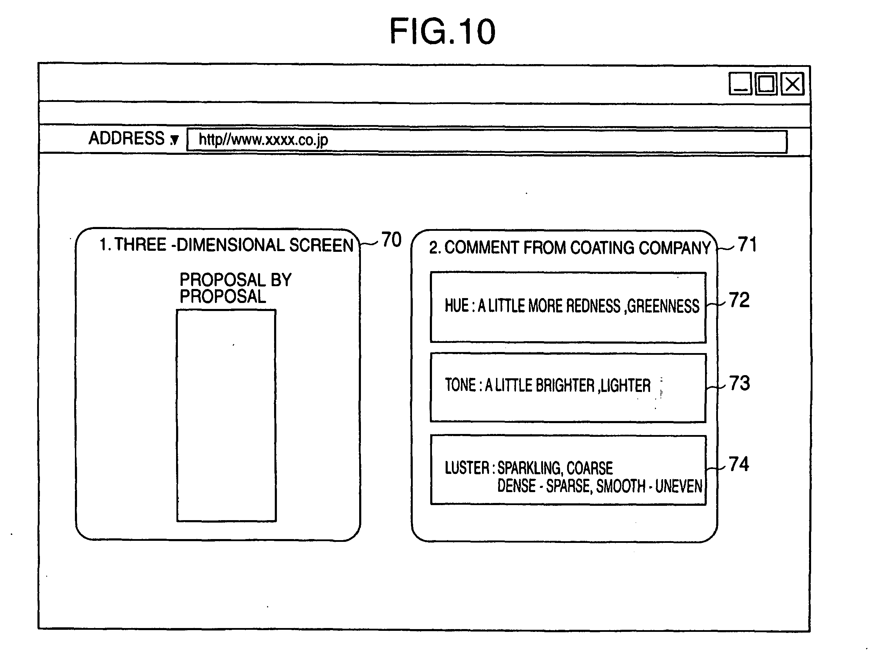

S13: The paint manufacture data management system performs color tuning by adjusting tones, hues, and light intensities based on received color image information, and presents the color tuning to the color coating company by using the communication network. In the color tuning, color correction is performed by using color data for three-dimensional image display as the one in the color presentation. FIG. 10 shows a screen of the color tuning by the paint manufacturer.

The color-tuning screen of FIG. 10 is composed of a three-dimensional screen 70 and a color coating company's comment column 71. The color coating company's comment column 71 is composed, for instance, of comment columns of hue 72, tone 73, and light intensity 74.

The color coating company writes comments, looking at the three-dimensional screen. The paint manufacturer makes corrections in accordance with the comments, and interacts with the color coating company.

S14: As a result of a great amount of communication between the paint manufacture data management system and the color coating system in the color presentation and color tuning, the design master is determined. The design master is a paint color on which the paint manufacturer and the color coating company agree on a design. The design master is color data for three-dimensional image display forming a three-dimensional image displayed on a display, but may be a painted panel made based on the data as required.

The design master is created by the paint manufacturer and is displayed in the color coating system by using the above-mentioned communication network 20. The design master can be mutually checked by using a screen. The display screen of the design master may be the same as that of the above-described color presentation.

S15 and S16: When the design master is determined, a selected color and paint are determined. The selected color, which is a color element forming the base of the development of the color of the design master, is determined in the following manner:
(1) In a case where the data of the design master includes the mixture information, coating workability information, physical property information (paint film performance information), and price information, the selected color is automatically determined.
(2) In a case where the data of the design master does not include the mixture information, coating workability information, physical property information (paint film performance information), and price information, if the design master is a three-dimensional image, the mixture information is obtained from the color data for three-dimensional image display of the design master by computer color matching and the selected color is determined with the other information being added. If the design master is a painted panel, the multi-angular spectral reflectance data is obtained so that the selected color is determined based thereon.
(3) In a case where the color of another company is determined as a design master as a result of a color contest, the multi-angular spectral reflectance data is obtained so that the selected color is determined based thereon as in the above-described (2).

The color data for three-dimensional image display based on the multi-angular spectral reflectance data includes the following two types:
(1) One that is obtained by measuring the spectral reflectance of a design-master painted panel by a multi-angular spectral reflectance measurement apparatus and can perform three-dimensional image display on a monitor by means of CAD.
(2) Data that is obtained by analyzing a large amount of spectral reflectance data accumulated in the past and can display a three-dimensional image of a desired color on a monitor.

The selected color, which is a color element forming the base of the development of the color of the design master, is determined in the above-described manner.

The selected paint, which is an actual paint that is mixed based on the mixture information to express the above-described selected color, is selected based on the coating workability information, physical property information (paint film performance information), and price information as described above.

When the selected color is determined, the color-matching part 33 of FIG. 4 obtains the mixture ingredients and ratio of a paint related to the selected color. Therefore, the determination of the design master leads to the determination of the selected color and paint. The determined color data is stored in the determined color data file 46 together with related data.

S17: The paint manufacturer manufactures the paint by referring to the determined color data file 46. The paint manufacturer manufactures the paint based on data for the mixture ingredients and ratio of the selected paint. As a result, coating can be performed to match coating conditions with the same color as that of the design master. The paint manufacturer mixes the paint in accordance with coating machine conditions by referring to the coating condition correction data file 41.

S18: The color coating company performs color coating by using the manufactured paint. Since the data for the mixture ingredients and ratio is actually measured data, no color difference is caused. The color coating company performs the coating under coating conditions at the time of mixing the paint.

In the above description, the paint manufacturer manufactures paint and the color coating company performs coating by using the paint. However, the color coating company may obtain the mixture data from the paint manufacture data management system and manufacture paint based on the data.

Further, in the above description, the color coating company performs coating. However, a coating contractor for the color coating company may obtain the mixture data from the paint manufacture data management system or the color coating system and manufacture the paint based on the data. The coating contractor for the color coating company can request the paint manufacture data management system 30 to manage the color coating system by informing the paint manufacture data management system 30 of data related to color coating conditions.

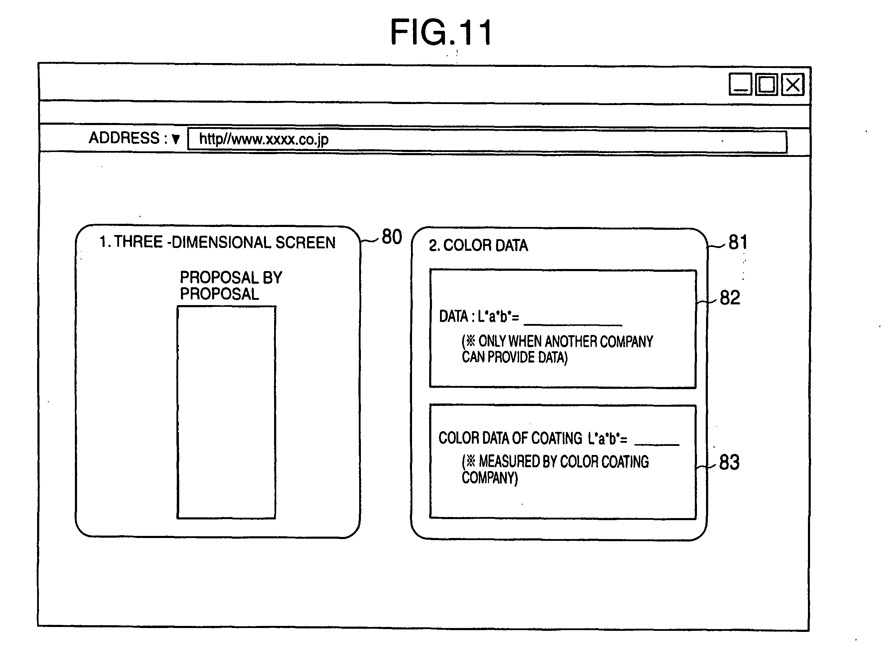

FIG. 11 shows a screen of a design master duplicate that is color-matched to the design master panel of another company in the case of a color contest. The design master duplicate screen of FIG. 11 is composed of a three-dimensional screen 80 and color data 81. The color data 81 is composed of color data L*a*b 82 or coating color data L*a*b 83 measured from a painted panel by the color coating company. "L*a*b" indicates a "CIEL*a*b" display system.

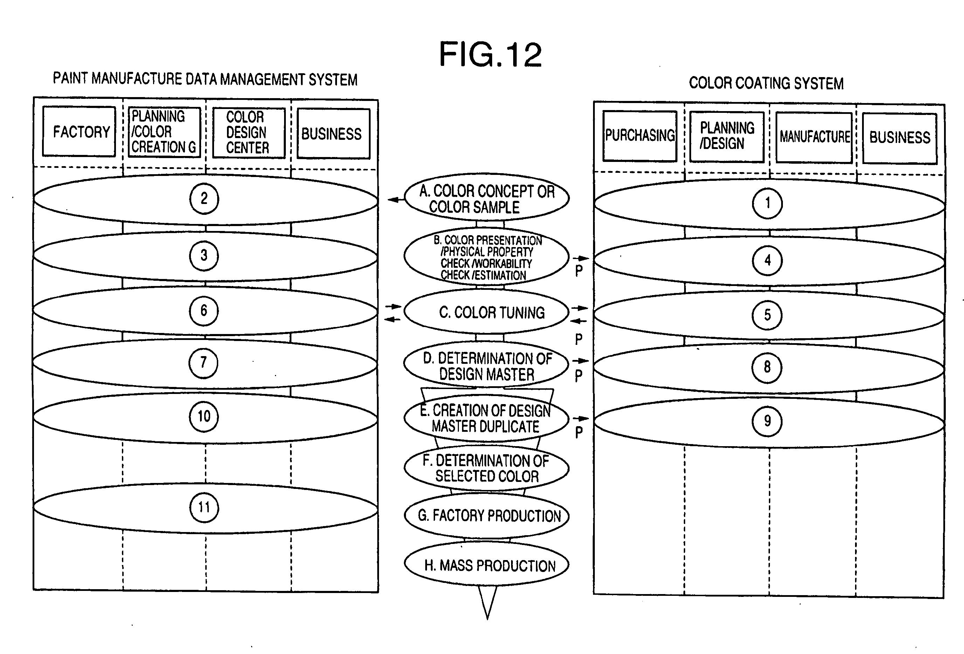

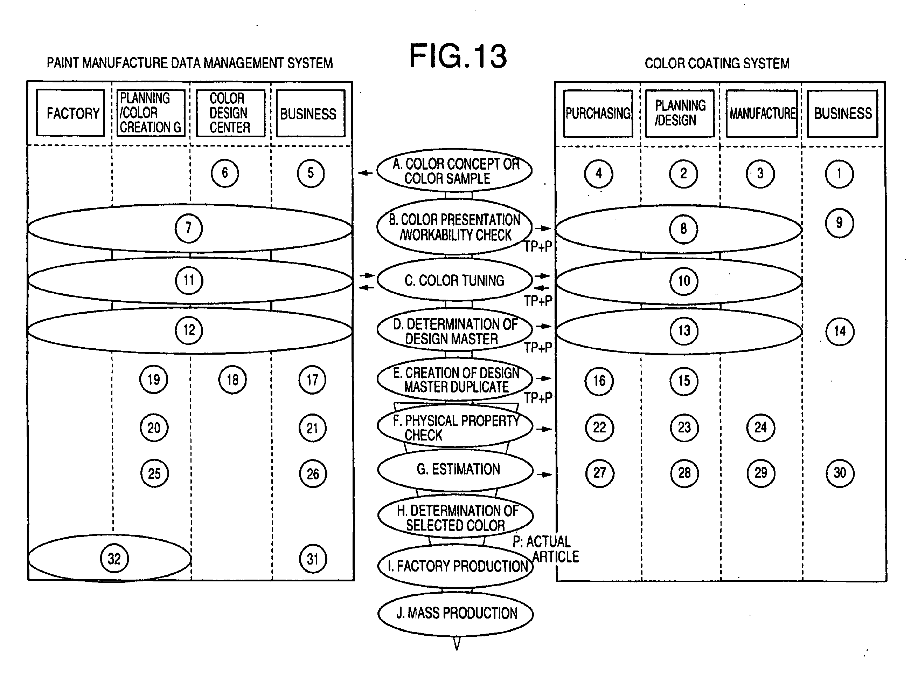

FIG. 12 is a diagram for illustrating an operation flow between the paint manufacture data management system and the color coating system according to the present invention. This flow corresponds to FIG. 1 that is a conventional example. According to this, the 12 processes and 52 steps are reduced to 8 processes and 11 steps. Letting FIG. 12 be the final stage, FIG. 13 is a diagram for illustrating an operation flow between the paint manufacture data management system and the color coating system at the present stage in the case of using a color sample at the same time. In FIGS. 12 and 13, P indicates transmission of a three-dimensional image (the same applies hereinafter).

Thereby, the 12 processes and 52 steps of FIG. 1 are also reduced to 10 processes and 32 steps.

An object whose color concept should be shared by the color coating company and the paint manufacturer becomes an object for coating. Vehicles, vehicle components, household appliances, communication-related goods, and building material panels can be taken as

### examples.

As described above, according to the embodiment 1, a variety of effects described below can be produced.

Exchanging information on objects for coating, coating conditions, paints, and colors via the communication network, the paint manufacturer and the color coating companies can propose three-dimensional color presentations and color tunings, and determine the color presentations and design masters while looking at screens in their respective offices.

Further, the paint manufacturer can manufacture paints of colors that are no different from those of color coatings by using data for the determined design masters.

Consequently, the paint manufacture can deliver goods in a short period of time and manufacture paints of high quality and low costs.

Further, small-quantity and multi-kind production is enabled so that a paint that meets the demand of a user can be supplied.

The color coating companies can propose color concepts and color images on screens, and further, can determine selected colors while considering the way colors are developed in three dimensions.

Further, coating is performable with a color that is no different from that of the determined design master irrespective of a production line and a coating machine.

### (Embodiment 2)

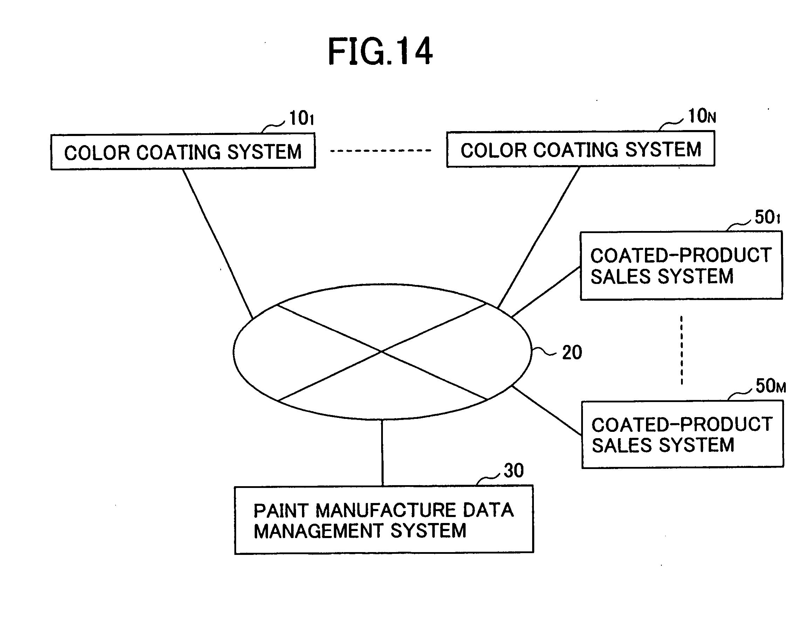

FIG. 14 shows a system configuration of an embodiment 2. The embodiment 2 is a system involving the paint manufacturer, the color coating companies, and coated-product sellers.

The system of FIG. 14 is composed of the color coating system 10₁ through the color coating system 10_{N}, the communication network 20, the paint manufacture data management system 30, and a coated product sales system 50₁ through a coated product sales system 50_{M}. The coated product sales systems 50 are held by sellers (coated-product sellers) that sell cellular phones, PHS, household appliances, or automobiles and are connected to the communication network 20. The color coating system 10₁ through the color coating system 10_{N}, the coated product sales system 50₁ through the coated product sales system 50_{N}, and the paint manufacture data management system 30 are provided with display units that can display a three-dimensional image in the same way so as to enable color presentation and color tuning. When the paint manufacture data management system and the color coating systems exchange information via the communication network 30 for color determination, the coated product sales systems can receive the information and display color-coated products on the monitor of the coated product sales systems. Further, as required, the coated product sales systems can participate in communication among the coated product sales systems, the paint manufacture data management system, and the color coating systems. That is, as will be later described, the coated product sales systems take part in the color presentation, the color image, and the color tuning to participate in the determination of design masters.

The paint manufacturer and the color coating companies exchange necessary information for paint manufacture, such as objects for coating, coating conditions, paints, and colors, via the communication network 30 by means of the color coating systems 10 and the paint manufacture data management system 30. Prior approval of selected colors and color check are performed by the coated-product sellers between the paint manufacture data management system 30 and the coated product sales system 50₁ through the coated product sales system 50_{M}.

As required, man can perform some of the operations among the color coating system 10, the communication network 20, the paint manufacture data management system 30, and the coated product sales system 50₁ through the coated product sales system 50_{M} depending on the contents of the operations.

The paint manufacture data management system 30 includes all or some of a communication control part communicating with the color coating systems and/or the coated product sales systems, a color-matching part performing color matching on colors in accordance with the proposals of the color coating systems and/or the coated product sales systems, an image processing part generating images of color-matched coated products, a price information provision operation part, a physical property check operation part, a workability check operation part, a coating condition correction data file, and a determined color data file.

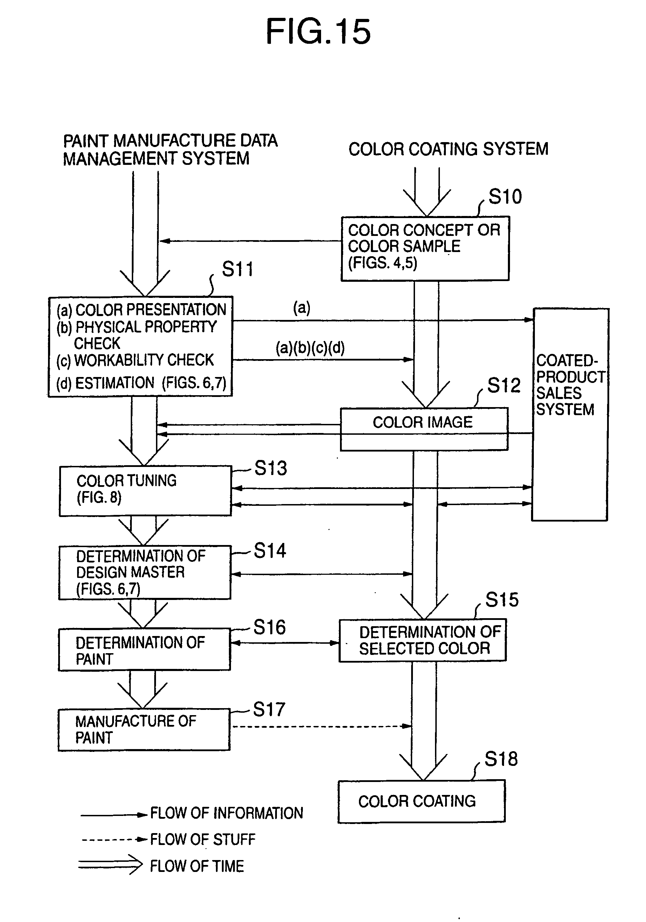

A description will be given, with reference to FIG. 15, of communication among the color coating system 10₁ through the color coating system 10_{N}, the paint manufacture data management system 30, and the coated product sales system 50₁ through the coated product sales system 50_{M} in FIG. 14.

FIG. 15 is different from FIG. 5 mainly in the following two points:

### (1) Color Presentation

The coated-product sellers, as well as the color coating companies, can receive color presentations from the paint manufacture data management system 30. Thereby, time and effort required to communicate presentation information to the coated-product sellers can be reduced.

Instead of mixing paints based on the mixtures of specified colors and delivering the paints to the color coating companies, the paint manufacturer may transmit the mixture information of the specified colors to the color coating systems by means of the paint manufacture data management system so that the color coating companies may mix the paints based on the mixture information and perform coating with the paints.

### (2) Color Tuning

The paint manufacturer, the color coating companies, and the coated-product sellers perform color tuning concurrently. Thereby, color-tuning time can be reduced considerably.

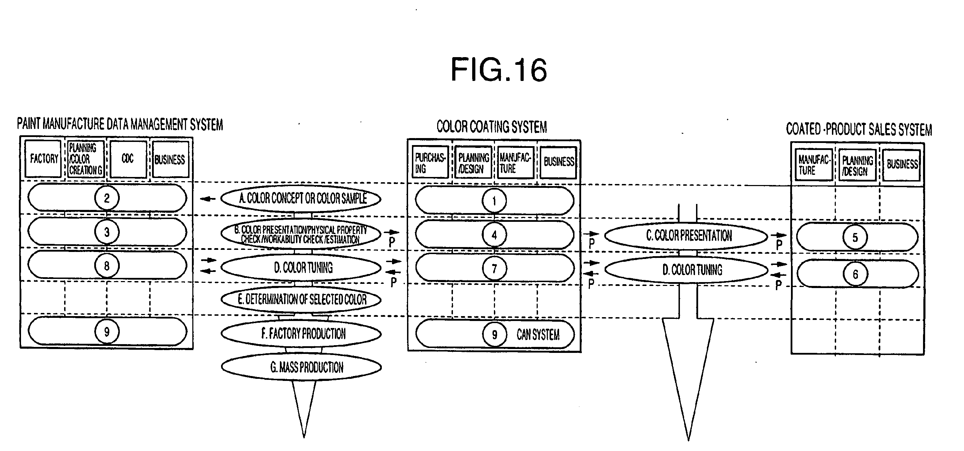

FIG. 16 is a diagram for illustrating an operation flow among the paint manufacture data management system, the color coating system, and the coated product sales system. The flow corresponds to FIG. 2 that is a conventional case. In FIG. 16, the paint manufacture data management system, the color coating system, and the coated product sales system are shown connected in series. However, the three systems are enabled to transmit and receive signals mutually via the communication network.

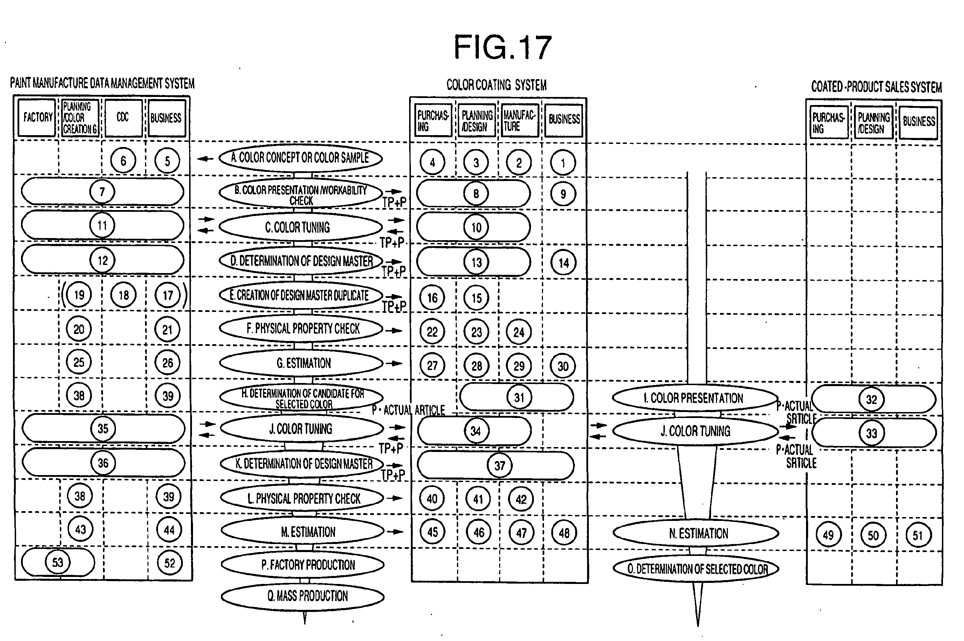

This shows that the number of processes and the number of steps are considerably reduced compared with FIG. 2. Further, letting FIG. 16 be the final stage, FIG. 17 is a diagram for illustrating an operation flow at the present stage in the case of using a coating sample at the same time. This also shows that the number of processes and the number of steps are reduced considerably.

According to the embodiment 2, in the case of involving the coated-product sellers in color determination, time and effort for determining the selected colors and color-adjustment operations can also be reduced by performing color presentation and color tuning by using the communication network.

### (Embodiment 3)

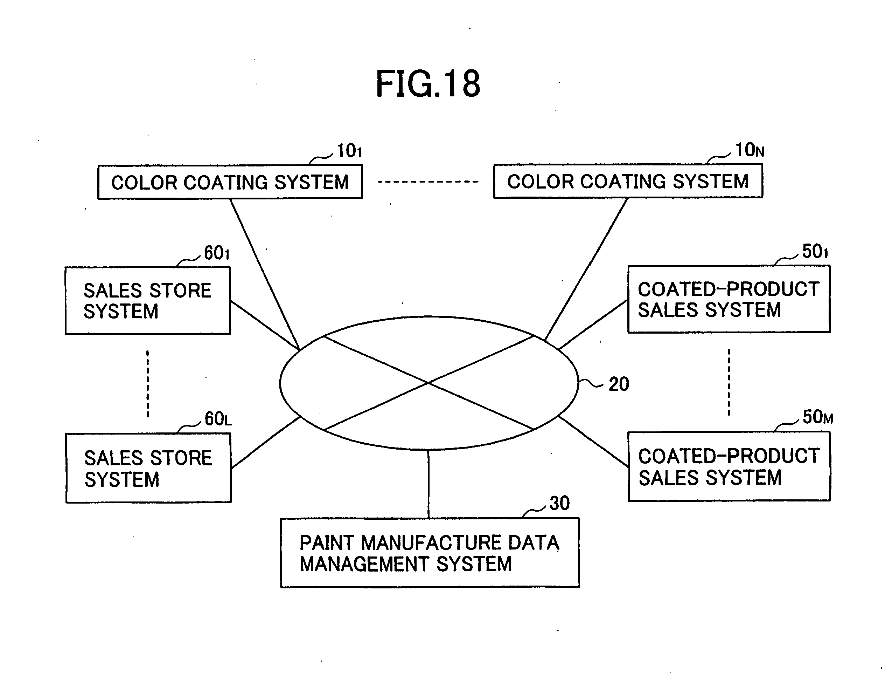

FIG. 18 shows a system configuration of an embodiment 3. The embodiment 3 is a system involving the paint manufacturer, the color coating companies, the coated-product sellers, and sales stores.

The system of FIG. 18 is composed of the color coating systems 10₁ through the color coating systems 10_{N}, the communication network 20, the paint manufacture data management system 30, the coated product sales system 50₁ through the coated product sales system 50_{M}, and a sales store system 60₁ through a sales store system 60_{L}. The color coating systems 10₁ through the color coating systems 10_{N}, the coated product sales system 50₁ through the coated product sales system 50_{M}, the sales store system 60₁ through the sales store system 60_{L}, and the paint manufacture data management system 30 are provided with display units that can display a three-dimensional image in the same way so as to enable color presentation and color tuning. The sales store systems 60 are not provided limitedly in the sales stores, but may be provided anywhere such as in public facilities or at home as far as the sales store systems 60 are provided with the display units that can display a three-dimensional image in the same way. Further, the system of FIG. 18 may or may not be able to perform the operation of FIG. 2, that is, an operation without the sales systems.

Viewing colors displayed on the monitors of the sales store systems 60, end users specify colors with which commercial products they purchase are coated, and transmit this color information to the paint manufacture data management system (paint manufacturer system) 30, the color coating system 10₁ through the color coating system 10_{N}, or the sales store system 60₁ through the sales store system 60_{L}. Next, the paint manufacture data management system 30 determines the paint mixtures of the colors specified by the sales store systems 60. At this point, the paint manufacture data management system 30 stores types of products having their colors specified, the specified-color information, and the mixtures of the specified colors together with the IDs of the sales store system 60₁ through the sales store system 60_{L} (or the names and IDs of the customers who have specified the colors) in the determined color data file 46.

The paint manufacture data management system mixes paints based on the mixture of the specified colors, and delivers the paints to the color coating companies that perform coating for the customers.

Instead of mixing the paints based on the mixtures of the specified colors and delivering the paints to the color coating companies, the paint manufacture may transmit the mixture information of the specified colors to the color coating systems by means of the paint manufacture data management system so that the color coating companies may mix the paints based on the mixture information and perform coating with the paints.

As required, man can perform some of the operations of the color coating systems 10, the communication network 20, the paint manufacture data management system 30, the coated product sales system 50₁ through the coated product sales system 50_{M}, the sales store system 60₁ through the sales store system 60_{L} depending on the contents of the operations.

The paint manufacture data management system 30 includes all or some of a communication control part communicating with the color coating systems and/or the coated product sales systems, a color-matching part performing color matching on colors in accordance with the proposals of the color coating systems and/or the coated product sales systems, an image processing part generating images of color-matched coated products, a price information provision operation part, a physical property check operation part, a workability check operation part, a coating condition correction data file, and a determined color data file.

According to the embodiment 3, in the case of involving the end users in color determination, time and effort for determining the selected colors and color-adjustment operations can also be reduced. Further, the end users are allowed to specify colors in purchasing commercial products so as to be able to purchase the commercial products of the colors matching their characters.

### (Embodiment 4)

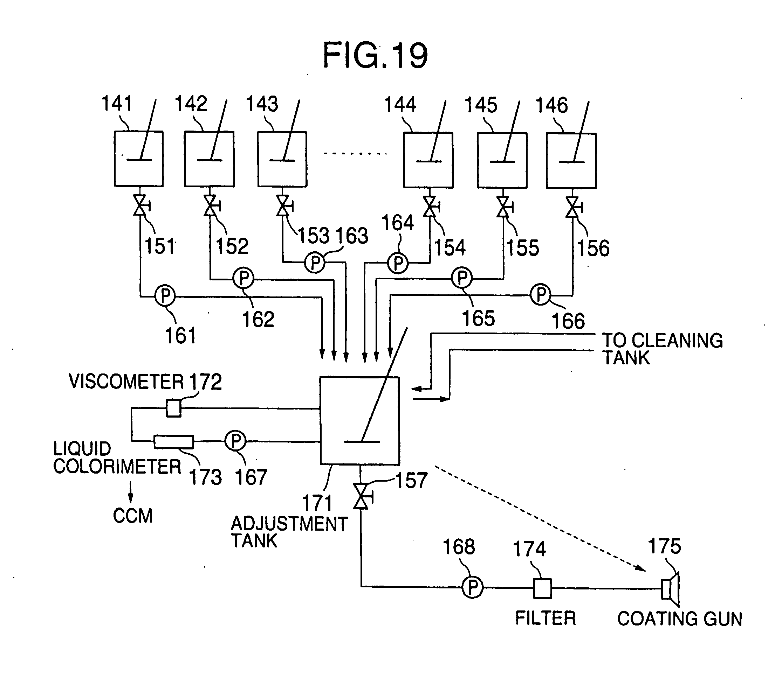

FIG. 19 shows an embodiment 4. The embodiment 4 relates to an automatic color-matching system implemented by the color coating company.

The system of FIG. 19 is composed of tanks 141 through 146 of paint components, valves 151 through 157, pumps 161 through 168, a preparation tank 171, a viscometer 172, a liquid colorimeter 173, a filter 174, and a coating gun 175. Here, the tanks of paint components are, for instance, the tanks 141 through 143 of fundamental color ingredients, the tanks 144 and 145 of lustrous material ingredients, and a dilution tank 146.

Based on mixture information from the paint manufacture data management system (paint manufacturer system), the valves 151 through 155 of the tanks 141 through 143 of the fundamental color ingredients and the tanks 144 and 145 of the lustrous material ingredients, and the pumps 161 through 165 are controlled so that paint is put in the preparation tank 171.

The paint of a given amount is put in the preparation tank 171, and viscosity control is performed by controlling the valve 156 of the dilution tank 146 and the pump 166 with external circulation being performed by referring to the viscometer 172.

Further, color measurement is performed by the liquid colorimeter 173. At this point, if there is a large deviation from a target hue, color matching is automatically performed. If a mixture is good, coating is performed by using the coating gun 175. The preparation tank may be replaced by an inline mixer so that mixing and dilution may be performed successively on a line. Further, a given amount may be put in a cartridge after the color matching in the preparation tank 171 so that coating may be performed with the cartridge being set in a coating machine. Further, coating may be performed with the paint components including the fundamental color ingredients and the lustrous material ingredients being mixed inside the coating gun 175 or at the tip thereof.

The coating machine is preferably a digital coating machine. The digital coating machine can perform correction exactly matching conditions based on coating data (correction data).

In the above description, the color coating company performs automatic color matching. However, a coating contractor for the color coating company may obtain mixture data from the paint manufacture data management system or the color coating system and perform automatic color matching based on the data.

According to the embodiment 4, the paint manufacturer delivers only fundamental colors to the color coating company. Since the color coating company is enabled to perform coating by producing the required amount of paint when necessary, a paint stock can be decreased so that the problem of change with the passage of time can be reduced. Further, since the color coating company uses the paint mixed based on the correction data considering the coating machine of the color coating company, coating may be performed without a problem of a color difference. Moreover, since the color coating company performs coating by mixing the paint based on color mixture information from the paint manufacturer, paint manufacture and management that perform paint manufacture and management by numerical data can be automated.

### (Embodiment 5)

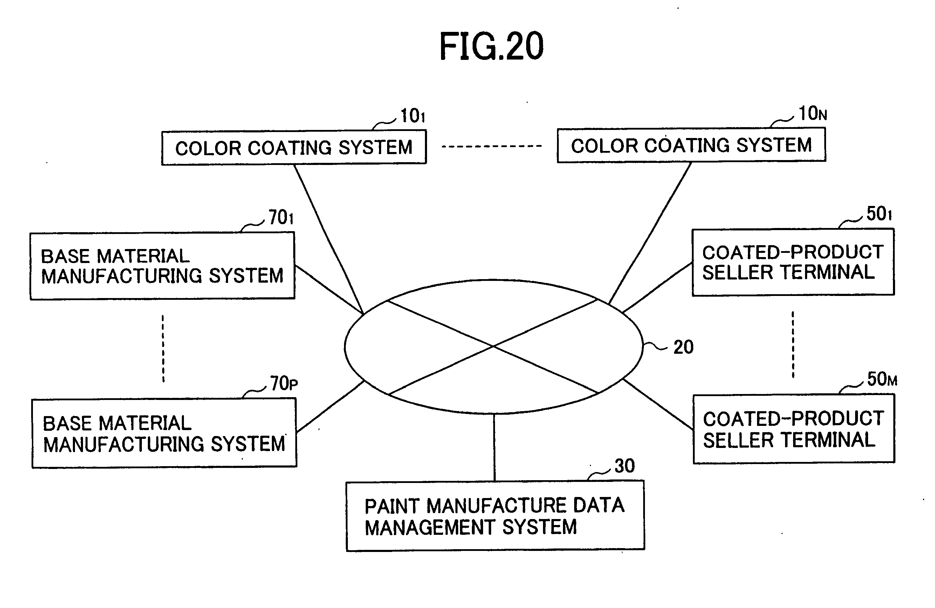

FIG. 20 shows a system configuration of an embodiment 5. The embodiment 5 is a system involving the color coating system 10₁ through the color coating system 10_{N}, the communication network 20, the paint manufacture data management system 30, the coated product sales system 50₁ through the coated product sales system 50_{M}, and a base material manufacturing system 70₁ through a base material manufacturing system 70_{P}. The color coating system 10₁ through the color coating system 10_{N}, the coated product sales system 50₁ through the coated product sales system 50_{M}, the base material manufacturing system 70₁ through the base material manufacturing system 70_{P}, and the paint manufacture data management system 30 are provided with display units that can display a three-dimensional image in the same way so as to enable color presentation and color tuning.

Like the embodiment 3, the system of FIG. 20 may allow end users to specify colors with which commercial products purchased by the end users are coated by viewing color-coated products displayed on the monitors of the sales store systems 60, and to transmit the color information to the paint manufacture data management system (paint manufacturer system) 30, the color coating system 10₁ through the color coating system 10_{N}, or the sales store system 60₁ through the sales store system 60_{L}.

The embodiment 5 is an embodiment preferred in the case of coating a colored base material with paint. In the processes of the embodiment 1 or 2, the paint manufacture data management system 30 or the color coating systems 10 transmit the color information of base materials to the base material manufacturing system 70₁ through the base material manufacturing system 70_{P} providing the base materials by means of monitors or painted panels before the design master determination after the color tuning. Thereafter, the base material manufacturing system 70₁ through the base material manufacturing system 70_{P} transmit the prices and performance of the base materials on which the colors can be developed based on the transmitted information. Then, the base material manufacturing system 70₁ through the base material manufacturing system 70_{P} and the color coating systems 10 interact with each other so as to determine selected base material types and base material color types. Thereafter, the base material types and the base material colors are combined so that color design masters are determined. Examples of the base materials include plastic, a metal (such as aluminum or a magnesium alloy), and a hybrid thereof.

Color-coated base materials may be checked by the paint manufacture data management system.

### (Embodiment 6)

The color coating system (including the system of a coating contractor for the color coating company) may have a function of measuring a panel coated with a color-matched paint by a colorimeter and performing re-color matching if a comparison of its measurement and the data of a design master results in a difference between the painted panel and the design master which difference is larger than or equal to a given one.

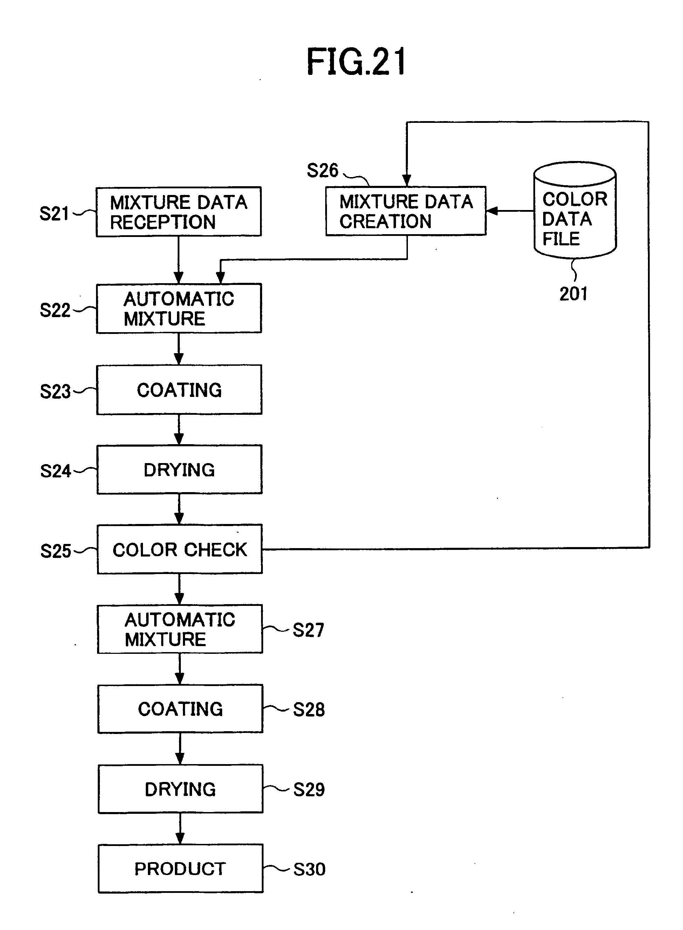

FIG. 21 shows an operation flow thereof.

An embodiment 6 shows a case where the color coating system includes a colorimeter and a color data file and can generate mixture data from a coating sample.

After the determination of a design master, the color coating system receives mixture data transmitted from the paint manufacture data management system (S21). Alternatively, the color coating system receives a design master coated panel instead of the mixture data and obtains the mixture data by performing color measurement. Paint is automatically mixed based on the mixture data (S22). The mixture at this time is trial mixture of a small amount of paint. Coating is performed with the paint (S23), and the paint is dried (S24). The dried paint is measured to be compared with the data of the design master (S25). If a difference between both data falls within a given range as a result, full-scale mixture is performed (S27), an object for coating is coated with the paint(S28), the paint is dried (S29), and a product is obtained (S30).

If the difference between both data is greater than the given range in step S25, mixture data is created by referring to a color data file 201. Automatic mixture is performed based on the mixture data (S22), coating is performed with the paint (S23), and the paint is dried (S24). The dried paint is measured to be compared with the design master as described above. If a difference between both data falls within the given range as a result, step S27 is entered. If the difference between both data is greater than the given range, step S26 and steps S22 through S25 are repeated until the difference between both data falls within the given range.

Thereby, coating can be performed with the same color as the design master.

The present invention is not limited to the specifically disclosed embodiments, but variations and embodiments may be made without departing from the claimed scope of the present invention.

## Claims

1. A paint manufacturing method **characterized in that** at least one of following processes (A) through (E) is performed by using a communication network in the processes (A) through (E).
(A) a process of a color coating system informing a paint manufacture data management system of a color concept or a color sample;
(B) a process of the paint manufacture data management system receiving the information of the color concept or the color sample, creating colors corresponding to the color concept or the color sample by color creation means, and performing color presentation by informing the color coating system and/or a coated product sales system of the colors;
(C) a process of the color coating system and/or the coated product sales system informing the paint manufacture data management system of color image information for correcting a color selected from the created colors;
(D) a process of the paint manufacture data management system performing color tuning based on the color image information and approving, together with the color coating system and/or the coated product sales system, a color as a design master, the color being determined as a result of repeating the provision of the color image information and the color tuning through mutual communication between the paint manufacture data management system and the color coating system and/or the coated product sales system; and
(E) a process of determining a selected color and paint for developing the color of the design master and creating paint mixture data by mutual communication of the paint manufacture data management system and the color coating system.

2. The paint manufacturing method as claimed in claim 1, **characterized in that**, in a case where a color contest is held among competitive companies so that a color of another company is determined as a design master, the paint manufacture data management system makes a duplicate panel from the design master of the other company and the duplicate panel is treated as the design master in said process (D).

3. The paint manufacturing method as claimed in claim 1, **characterized in that** the color presentation in said process (B) and the color tuning in said process (D) are performed by the paint manufacture data management system providing color data for three-dimensional image display which color data is based on multi-angular spectral reflectance so that the colors are displayed in three-dimensional images on a monitor of the color coating system and/or a monitor of the coated product sales system.

4. The paint manufacturing method as claimed in claim 1, **characterized in that** the color presentation in said process (B) includes at least one of coating workability information, paint film performance information, and price information.

5. The paint manufacturing method as claimed in claim 1, **characterized in that** a display monitor employed in the color coating system and/or a display monitor employed in the coated product sales system in said processes (B), (C), and (D) are/is equal in type, model, and adjustment to a standard monitor provided in the paint manufacture data management system.

6. The paint manufacturing method as claimed in claim 1, further **characterized by** comprising at least one of:
(F) a process of the paint manufacture data management system informing the color coating system and/or the coated product sales system of a peripheral color created from the design master, and the paint manufacture data management system and the color coating system and/or the coated product sales system mutually checking the peripheral color;
(G) a process of the paint manufacture data management system informing the color coating system of paint film performance of a paint of the selected color selected in said process (E)
(H) a process of the paint manufacture data management system informing the color coating system of price information of the paint of the selected color selected in said process (E).

7. The paint manufacturing method as claimed in claim 1, **characterized in that** a coating sample is also used in said process (B) and/or said process (D).

8. The paint manufacturing method as claimed in claim 6, **characterized in that** a coating sample is also used in said process (F).

9. The paint manufacturing method as claimed in claim 1, **characterized in that** an end user of a coated product accesses one of the paint manufacture data management system, the color coating system, and the coated product sales system, and informs the accessed one of the color concept or the color sample and the color image information of a coated product to purchase.

10. The paint manufacturing method as claimed in claim 1, **characterized in that**, in the case of coating a colored base material with paint:
the paint manufacture data management system or the color coating system informs a base material manufacturing system providing the base material of color information of a base material color in said process (D);
the base material manufacturing system and the color coating system thereafter determine a selected base material and the base material color; and
a design master including the selected base material and the base material color is determined thereafter.

11. The paint manufacturing method as claimed in claim 1, **characterized in that** the paint manufacture data management system manufactures paint based on mixture data created by the paint manufacture data management system, or that the paint manufacture data management system informs the color coating system of the mixture data so that the color coating system manufactures the paint based on the mixture data.

12. The paint manufacturing method as claimed in claim 11, **characterized in that** a coating contract system of a company related to the color coating system manufactures the paint based on the mixture data of which the color coating system is informed.

13. A coating method **characterized in that** a paint manufacture data management system provides paint mixture data created by said process (D) of claim 1 so that coating is performed after or while a color coating system or a coating contract system of a company related to the color coating system performs color matching on paint based on the provided mixture data.

14. The coating method as claimed in claim 13, **characterized in that** the color coating system or the coating contract system of the company related to the color coating system informs the paint manufacture data management system of at least data for coating conditions which data is used in the coating so that the paint manufacture data management system manages the coating conditions by the data.

15. The coating method as claimed in claim 13,
**characterized in that**:
the color coating system or the coating contract system measures a panel coated with a color-matched paint by a colorimeter and compares a measurement thereof and data of a design master; and
the color matching is performed again if a difference between the coated panel and the design master is larger than or equal to a given one.

16. A paint manufacture data management system connected via a communication network to a color coating system and/or a coated product sales system, the paint manufacture data management system **characterized by** comprising:
a communication control part communicating with a plurality of color coating systems and/or coated product sales systems;
a color-matching part performing color matching based on information transmitted from the color coating systems and/or the coated product sales systems; and
an image processing part generating images of color-matched coated products.

17. The paint manufacture data management system as claimed in claim 16, further **characterized by** comprising one of a price information provision operation part, a paint film performance check operation part, and a workability check operation part.

18. The paint manufacture data management system as claimed in claim 16, further **characterized by** comprising a coating condition correction data file.

19. The paint manufacture data management system as claimed in claim 16, further **characterized by** comprising a determined color data file.

## Patentansprüche

1. Verfahren zur Herstellung von Farbmischungen, **dadurch gekennzeichnet, dass** mindestens einer der nachfolgenden Prozesse (A) bis (E) unter Verwendung eines Kommunikationsnetzwerkes in dem Prozess (A) bis (E) ausgeführt ist:
(A) Prozess eines Farbbeschichtungssystems, welches einem Datenmanagementsystem zur Herstellung von Farbmischungen einen Farbentwurf oder ein Farbmuster mitteilt;
(B) Prozess des Datenmanagementsystems zur Herstellung von Farbmischungen, welches die Informationen des Farbentwurfs oder des Farbmusters erhält, Ausgestaltung von Farben entsprechend des Farbentwurfs oder des Farbmusters durch Farbgestaltungsmittel, und Ausführung einer Farbpräsentation durch Mitteilung des Farbbeschichtungssystem und/oder eines Verteilersystems beschichteter Produkte der Farben;
(C) Prozess des Farbbeschichtungssystems und/oder des Verteilersystems beschichteter Produkte, welches dem DatenManagementsystem zur Herstellung von Farbmischungen Abbildungsinformationen zur Korrektur einer Farbe mitteilt, selektiert von den ausgestalteten Farben;
(D) Prozess eines Datenmanagementsystems zur Herstellung von Farbmischungen, welches Farbabstimmungen bezogen auf die Farbabbildungsinformationen ausführt und freigibt, zusammen mit dem Farbbeschichtungssystem und/oder des Verteilersystems beschichteter Produkte, eine Farbe als Grundanordnung, wobei die Farbe als Ergebnis von wiederholenden Festlegungen der Farbabbildungsinformationen und der Farbabstimmung bestimmt ist, durch beidseitige Kommunikation zwischen dem Datenmanagementsystem zur Herstellung von Farbmischungen und des Farbbeschichtungssystems und/oder des Verteilersystems beschichteter Produkte; und
(E) Prozess zur Festlegung einer selektierten Farbe und Mischung zur Ausbildung der Farbe der Grundanordnung und Ausgestaltung von Mischungsdaten der Mischung durch beidseitige Kommunikation des Datenmanagementsystems zur Herstellung von Farbmischungen und des Farbbeschichtungssystems.

2. Verfahren zur Herstellung von Farbmischungen nach Anspruch 1, **dadurch gekennzeichnet, dass** in einem Fall, wenn eine Farbwahl zwischen Wettbewerbsfirmen gehalten wird, so dass eine Farbe einer anderen Firma als Grundanordnung festgelegt ist, das Datenmanagementsystem zur Herstellung von Farbmischungen eine Kopie der Grundanordnung der anderen Firma erstellt und das kopierte Element als Grundanordnung in dem Prozess (D) eingesetzt wird.

3. Verfahren zur Herstellung von Farbmischungen nach Anspruch 1, **dadurch gekennzeichnet, dass** die Farbpräsentation in dem Prozess (B) und die Farbabstimmung in dem Prozess (D) durch das Datenmanagementsystem zur Herstellung von Farbmischungen ausgeführt wird, um Farbdaten zur dreidimensionalen Abbildungsdarstellung zur Verfügung zu stellen, wobei die Farbdaten auf eine Mehrfach-Winkelspektralreflexion basieren, so dass die Farben in einer dreidimensionalen Abbildung auf einem Monitor des Farbbeschichtungssystems und/oder eines Monitors des Verteilersystems beschichteter Produkte dargestellt sind.

4. Verfahren zur Herstellung von Farbmischungen nach Anspruch 1, **dadurch gekennzeichnet, dass** die Farbpräsentation in dem Prozess (B) mindestens eine Beschichtungsverarbeitungsinformation, eine Farbmischfilmleistungsinformation und eine Preisinformation aufweist.

5. Verfahren zur Herstellung von Farbmischungen nach Anspruch 1, **dadurch gekennzeichnet, dass** ein Bildschirmmonitor, welcher in dem Farbbeschichtungssystem verwendet wird und/oder ein Bildschirmmonitor, welcher in dem Verteilersystem beschichteter Produkte in dem Prozess (B), (C) und (D) verwendet wird gleich in Bezug auf Typ, Modell und Anordnung zu einem Standardmonitor sind/ist, welcher in dem Datenmanagementsystem zur Herstellung von Farbmischungen zur Verfügung gestellt wird.

6. Das Verfahren zur Herstellung von Farbmischungen nach Anspruch 1, welches ferner **dadurch gekennzeichnet ist, dass** das Verfahren mindestens aufweist:
(F) Ein Prozess eines Datenmanagementsystems zur Herstellung von Farbmischungen informiert das Farbbeschichtungssystem und/oder das Verteilersystem beschichteter Produkte über eine Randfarbe, welche von der Grundanordnung ausgestaltet ist, und das Datenmanagementsystem zur Herstellung von Farbmischungen und das Farbbeschichtungssystem und/oder das Verteilersystem beschichteter Produkte überprüfen beidseitig die Randfarbe;
(G) Ein Prozess des Datenmanagementsystems zur Herstellung von Farbmischungen informiert das Farbbeschichtungssystem über eine Farbmischungsfilmleistung einer Farbmischung einer selektierten Farbe, welche in dem Prozess (E) selektiert ist;
(H) Ein Prozess des Datenmanagementsystems zur Herstellung von Farbmischungen informiert das Farbbeschichtungssystem über Preisinformationen der Farbmischung der selektierten Farbe, welche in dem Prozess (E) selektiert ist.

7. Verfahren zur Herstellung von Farbmischungen nach Anspruch 1, **dadurch gekennzeichnet, dass** ein Beschichtungsmuster ebenfalls in dem Prozess (B) und/oder in dem Prozess (D) verwendet wird.

8. Verfahren zur Herstellung von Farbmischungen nach Anspruch 6, **dadurch gekennzeichnet, dass** ein Beschichtungsmuster ebenfalls in Prozess (F) verwendet wird.

9. Verfahren zur Herstellung von Farbmischungen nach Anspruch 1, **dadurch gekennzeichnet, dass** ein Endverbraucher eines beschichteten Produktes eines dem Managementsystem, dem Farbbeschichtungssystem, und dem Verteilersystem beschichteter Produkte zuordnet und informiert den einen zugeordneten Farbentwurf oder das Farbmuster und die Farbabbildungsinformation eines beschichteten Produktes zu kaufen.

10. Verfahren zur Herstellung von Farbmischungen nach Anspruch 1, **dadurch gekennzeichnet, dass** in dem Fall einer Beschichtung eines farbbasierten Materials mit Lack Folgendes aufweist:
Das Datenmanagementsystem zur Herstellung von Farbmischungen oder das Farbbeschichtungssystem informiert ein Grundmaterialherstellsystem, welches das Grundmaterial der Farbinformation einer Basismaterialfarbe in Prozess (D) zur Verfügung stellt;
das Grundmaterialherstellungssystem und das Farbbeschichtungssystem bestimmen danach ein selektiertes Grundmaterial und die Grundmaterialfarbe; und
eine Grundanordnung, welche das selektierte Grundmaterial und die Grundmaterialfarbe aufweist wird danach bestimmt.

11. Verfahren zur Herstellung von Farbmischungen nach Anspruch 1, **dadurch gekennzeichnet, dass** das Datenmanagementsystem zur Herstellung von Farbmischungen herstellt, welche auf Mischungen von Daten basieren, die durch das Datenmanagementsystem zur Herstellung von Farbmischungen ausgestaltet sind, oder dass das Datenmanagementsystem zur Herstellung von Farbmischungen das Farbbeschichtungssystem des Datengemischs informiert, so dass das Farbbeschichtungssystem die Farbmischung herstellt, welche auf der Datenmischung basiert.

12. Verfahren zur Herstellung einer Farbmischung nach Anspruch 11, **dadurch gekennzeichnet, dass** ein Beschichtungsauftragssystem einer Firma sich auf das Farbbeschichtungssystem bezieht, welches die Farbmischung herstellt, basierend auf den Mischungsdaten, über welche das Farbbeschichtungssystem informiert wird.

13. Ein Beschichtungsverfahren, **dadurch gekennzeichnet, dass** Datenmanagementsystem zur Herstellung von Farbmischungen Farbmischungsdaten zur Verfügung stellt, welche durch Prozess (D) des Anspruches 1 ausgestaltet sind, so dass das Beschichten nach oder während ein Farbbeschichtungssystem oder ein Beschichtungsauftragssystem einer Firma sich auf das Farbbeschichtungssystem bezieht ausgeführt, welches Farbabstimmung von Farbmischungen ausführt, welche auf den zur Verfügung gestellten Mischungsdaten basieren.

14. Beschichtungsverfahren nach Anspruch 13, **dadurch gekennzeichnet, dass** das Farbbeschichtungssystem oder das Beschichtungsauftragssystem einer Firma, welches sich auf ein Farbbeschichtungssystem bezieht, das Datenmanagementsystem zur Herstellung einer Farbmischung mindestens mit Daten für Beschichtungskonditionen informiert, wobei die Daten in der Beschichtung derart verwendet werden, dass das Datenmanagementsystem zur Herstellung von Farbmischungen die Beschichtungskonditionen durch die Daten steuert.

15. Beschichtungsverfahren nach Anspruch 13 durch nachfolgende Verfahrensschritte **gekennzeichnet**:
Das Farbbeschichtungssystem oder das Farbauftragssystem misst mittels einem Farbmessgerät ein Element, welches mit einer farbabgestimmten Farbmischung beschichtet ist und vergleicht eine Messung hiervon mit den Daten einer Grundanordnung; und
die Farbabstimmung wird nochmals ausgeführt, wenn der Unterschied zwischen dem beschichteten Element und der Grundanordnung größer oder gleich zu einem vorgegebenen Element ist.

16. Ein Datenmanagementsystem zur Herstellung von Farbmischungen, welches über ein Kommunikationsnetzwerk mit einem Farbbeschichtungssystem und/oder einem Produktbeschichtungsvertriebssystem verbunden ist, wobei das Datenmanagementsystem zur Herstellung von Farbmischungen durch Folgendes **gekennzeichnet** ist:
Ein Kommunikationskontrollteil, welches mit einer Mehrzahl von Farbbeschichtungssystemen und/oder eines Verteilersystems beschichteter Produkte kommuniziert;
ein farbangepasstes Teil, welches Farbanpassungen ausführt, die auf übermittelte Informationen von dem Farbbeschichtungssystem und/oder des Produktbeschichtungsvertriebssystem basieren; und
ein abgebildetes Prozessteil, welches Abbildungen der farbabgestimmten, beschichteten Produkte erzeugt.

17. Datenmanagementsystem zur Herstellung von Farbmischungen nach Anspruch 16, welches ferner **dadurch gekennzeichnet ist, dass** dieses eine der Preisinformationen aufweist, welche durch Handfärbungsteile festgelegt ist, ein Handhabungsteil für eine Funktionsprüfung eines Farbmischungsfilms und ein Handhabungsteil für eine Verarbeitbarkeitsprüfung.

18. Datenmanagementsystem zur Herstellung von Farbmischungen nach Anspruch 16, welches ferner **dadurch gekennzeichnet ist, dass** dieses eine Korrekturdatenreihe einer Beschichtungskondition aufweist.

19. Datenmanagementsystem zur Herstellung einer Farbmischung nach Anspruch 16 ferner **dadurch gekennzeichnet, dass** dieses eine festgelegte Farbdatenreihe aufweist.

## Revendications

1. Procédé de fabrication de peinture, **caractérisé en ce que** au moins un des processus suivants (A) à (E) est effectué en utilisant un réseau de communication dans les processus (A) à (E)
(A) un processus d'un système de revêtement de couleur informant un système de gestion de données de fabrication de peinture d'un concept de couleur ou d'un échantillon de couleur ;
(B) un processus du système de gestion de données de fabrication de peinture recevant les informations du concept de couleur ou de l'échantillon de couleur, créant des couleurs correspondant au concept de couleur ou à l'échantillon de couleur par des moyens de création de couleur, et effectuant une présentation de couleur en informant le système de revêtement de couleur et / ou un système de ventes de produit peints des couleurs ;
(C) un processus du système de revêtement de couleur et / ou du système de vente de produits peints informant le système de gestion de données de fabrication de peinture d'informations d'image en couleurs afin de corriger une couleur sélectionnée parmi les couleurs créées ;
(D) un processus du système de gestion de données de fabrication de peinture effectuant un ajustement de couleur sur la base des informations d'image en couleur et approuvant, conjointement avec le système de revêtement de couleur et / ou le système de vente de produits peints, une couleur comme un original de conception, la couleur étant déterminée comme un résultat de répétition de la provision des informations d'image en couleur et de l'ajustement de couleur par une communication mutuelle entre le système de gestion de données de fabrication de peinture et le système de revêtement de couleur et / ou le système de vente de produits peints ; et
(E) un processus de détermination d'une couleur et d'une peinture sélectionnées afin de développer la couleur de l'original de conception et de créer des données de mélange de peinture par communication mutuelle du système de gestion de données de fabrication de peinture et du système de revêtement de couleur.

2. Procédé de fabrication de peinture selon la revendication 1, **caractérisé en ce que**, dans un cas dans lequel un concours de couleur est tenu parmi des sociétés concurrentes de telle sorte qu'une couleur d'une autre société est déterminée comme un original de conception, le système de gestion de données de fabrication de peinture effectue un panneau dupliqué à partir de l'original de conception de l'autre société et le panneau dupliqué est traité comme l'original de conception dans ledit processus (D).

3. Procédé de fabrication de peinture selon la revendication 1, **caractérisé en ce que** la présentation de couleur dans ledit processus (B) et l'ajustement de couleur dans ledit processus (D) sont effectués par le système de gestion de données de fabrication de peinture produisant des données de couleur pour un affichage d'image en trois dimensions, lesquelles données de couleur sont basées sur un reflet de spectre multi angulaire de telle sorte que les couleurs sont affichées dans des images en trois dimensions sur un écran du système de revêtement de couleur et / ou un écran du système de vente de produits peints.

4. Procédé de fabrication de peinture selon la revendication 1, **caractérisé en ce que** la présentation de couleur dans ledit processus (B) comprend au moins une d'une information de faculté d'application de revêtement, d'une information de performances pelliculaires de peinture et d'informations de prix.

5. Procédé de fabrication de peinture selon la revendication 1, **caractérisé en ce qu'**un écran d'affichage utilisé dans le système de revêtement de couleur et / ou un écran d'affichage utilisé dans le système de vente de produits peints dans lesdits processus (B), (C) et (D) est / sont identiques en type, modèle et ajustement à un écran standard prévu dans le système de gestion de données de fabrication de peinture.

6. Procédé de fabrication de peinture selon la revendication 1, **caractérisé en outre en ce qu'**il comprend au moins un de :
(F) un processus du système de gestion de données de fabrication de peinture informant le système de revêtement de couleur et / ou le système de vente de produits peints d'une couleur périphérique créée à partir de l'original de conception et du système de gestion de données de fabrication de peinture et du système de revêtement de couleur et / ou du système de vente de produits peintes vérifiant mutuellement la couleur périphérique ;
(G) un processus du système de gestion de données de fabrication de peinture informant le système de revêtement de couleur des performances pelliculaires de peinture d'une peinture de la couleur sélectionnée sélectionnée dans ledit processus (E)
(H) un processus du système de gestion de données de fabrication de peinture informant le système de revêtement de couleur d'informations de prix de la peinture de la couleur sélectionnée sélectionnée dans ledit processus (E).

7. Procédé de fabrication de peinture selon la revendication 1, **caractérisé en ce qu'**un échantillon de revêtement est également utilisé dans ledit processus (B) et / ou ledit processus (D).

8. Procédé de fabrication de peinture selon la revendication 6, **caractérisé en ce qu'**un échantillon de revêtement est également utilisé dans ledit processus (F).

9. Procédé de fabrication de peinture selon la revendication 1, **caractérisé en ce qu'**un utilisateur final d'un produit revêtu a accès à un du système de gestion de données de fabrication de peinture, du système de revêtement de couleur et du système de vente de produits revêtus et informe celui auquel il a accédé du concept de couleur ou de l'échantillon de couleur et des informations d'image en couleur d'un produit revêtu à acheter.

10. Procédé de fabrication de peinture selon la revendication 1, **caractérisé en ce que**, dans le cas du revêtement d'un matériau de base coloré avec de la peinture :
le système de gestion de données de fabrication de peinture ou le système de revêtement de couleur informe un système de fabrication de matériau de base produisant le matériau de base des informations de couleur d'une couleur de matériau de base dans ledit processus (D) ;
le système de fabrication de matériau de base et le système de revêtement de couleur déterminent ensuite un matériau de base sélectionné et la couleur du matériau de base ; et
un original de conception comprenant le matériau de base sélectionné et la couleur du matériau de base est déterminé par la suite.

11. Procédé de fabrication de peinture selon la revendication 1, **caractérisé en ce que** le système de gestion de données de fabrication de peinture fabrique de la peinture sur la base des données de mélange créées par le système de gestion de données de fabrication de peinture ou **en ce que** le système de gestion de données de fabrication de peinture informe le système de revêtement de couleur des données de mélange de telle sorte que le système de revêtement de couleur fabrique la peinture sur la base des données de mélange.

12. Procédé de fabrication de peinture selon la revendication 11, **caractérisé en ce qu'**un système de contrat de revêtement d'une société liée au système de revêtement de couleur fabrique la peinture sur la base des données de mélange dont le système de revêtement de couleur est informé.

13. Procédé de revêtement, **caractérisé en ce qu'**un système de gestion de données de fabrication de peinture produit des données de mélange de peinture créées par ledit processus (D) de la revendication 1 de telle sorte que le revêtement est effectué après ou pendant qu'un système de revêtement de couleur ou un système de contrat de revêtement d'une société liée au système de revêtement de couleur effectue une correspondance de couleur sur la peinture sur la base des données de mélange produites.

14. Procédé de revêtement selon la revendication 13, **caractérisé en ce que** le système de revêtement de couleur ou le système de contrat de revêtement de la société liée au système de revêtement de couleur informe le système de gestion de données de fabrication de peinture d'au moins des données concernant des conditions de revêtement, lesquelles données sont utilisées dans le revêtement de telle sorte que le système de gestion de données de fabrication de peinture gère les conditions de revêtement par le biais des données.

15. Procédé de revêtement selon la revendication 13, **caractérisé en ce que** :
le système de revêtement de couleur ou le système de contrat de revêtement mesure un panneau revêtu avec une peinture à couleur correspondante par un colorimètre et compare une mesure de celui-ci et des données d'un original de conception ; et
la correspondance de couleur est effectuée de nouveau si une différence entre le panneau revêtu et l'original de conception est supérieure ou égale à une différence donnée.

16. Système de gestion de données de fabrication de peinture connecté par le biais d'un réseau de communication à un système de revêtement de couleur et / ou un système de vente de produits peints, le système de gestion de données de fabrication de peinture étant **caractérisé en ce qu'**il comprend :
une partie de contrôle de communication communiquant avec une pluralité de systèmes de revêtement de couleur et / ou de systèmes de vente de produits peints ;
une partie de correspondance de couleur effectuant une correspondance de couleur sur la base d'informations transmises depuis les systèmes de revêtement de couleur et / ou les systèmes de vente de produits peints ; et
une partie de traitement d'image générant des images des produits peints à couleur correspondante.

17. Système de gestion de données de fabrication de peinture selon la revendication 16, **caractérisé en outre en ce qu'**il comprend une d'une partie d'opération de provision d'informations de prix, d'une partie d'opération de vérification de performances pelliculaires de peinture et d'une partie d'opération de vérification de faculté d'application.

18. Système de gestion de données de fabrication de peinture selon la revendication 16, **caractérisé en outre en ce qu'**il comprend un fichier de données de correction de condition de revêtement.

19. Système de gestion de données de fabrication de peinture selon la revendication 16, **caractérisé en outre en ce qu'**il comprend un fichier de données de couleur déterminée.
